# EUROPEAN PATENT APPLICATION

(11) **EP 3 926 999 A1**
(43) Date of publication of application: **22.12.2021**
(21) Application number: 20756055.8
(22) Date of filing: 03.02.2020
(51) Int. Cl.: H04W 16/28, H04W 24/10

(54) **COMMUNICATION SYSTEM, COMMUNICATION TERMINAL, AND BASE STATION**

(30) Priority: 12.02.2019 JP 2019022783
(71) Applicant: MITSUBISHI ELECTRIC CORPORATION, Chiyoda-ku Tokyo 100-8310 (JP)
(72) Inventor: NAKAMURA Kiyoshige, Tokyo 100-8310 (JP); MOCHIZUKI Mitsuru, Tokyo 100-8310 (JP); SHIMODA Tadahiro, Tokyo 100-8310 (JP)
(74) Representative: Sajda, Wolf E.
(86) International application number: PCT/JP2020/003937
(87) International publication number: WO 2020/166411

(57) **Abstract**

The present invention has an object to prevent failure of communication due to leaving of a communication terminal from a radiation range of a beam selected by the communication terminal. A communication system according to the present invention includes: a base station (203) configured to transmit a plurality of directional beams being different from each other; and a communication terminal (202) configured to perform radio communication with the base station (203) by using a beam for communication selected from the plurality of directional beams. A system information block transmitted by the base station (203) includes, regarding each of the plurality of directional beams, neighboring beam information indicating neighboring beams being adjacent to each of the plurality of directional beams. The communication terminal (202) selects the beam for communication, based on the neighboring beam information.

## Description

### Technical Field

The present invention relates to a radio communication technology.

### Background Art

The 3rd generation partnership project (3GPP), the standard organization regarding the mobile communication system, is studying communication systems referred to as long term evolution (LTE) regarding radio sections and system architecture evolution (SAE) regarding the overall system configuration including a core network and a radio access network which is hereinafter collectively referred to as a network as well (for example, see Non-Patent Documents 1 to 5). This communication system is also referred to as 3.9 generation (3.9 G) system.

As the access scheme of the LTE, orthogonal frequency division multiplexing (OFDM) is used in a downlink direction and single carrier frequency division multiple access (SC-FDMA) is used in an uplink direction. Further, differently from the wideband code division multiple access (W-CDMA), circuit switching is not provided but a packet communication system is only provided in the LTE.

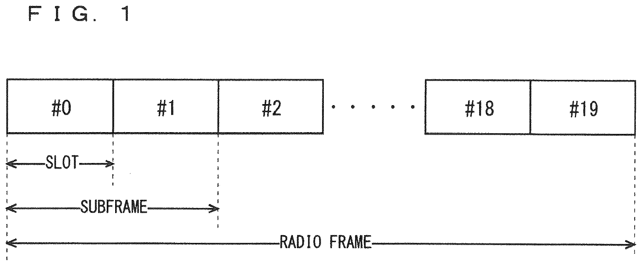

The decisions taken in 3GPP regarding the frame configuration in the LTE system described in Non-Patent Document 1 (Chapter 5) are described with reference to FIG. 1. FIG. 1 is a diagram illustrating the configuration of a radio frame used in the LTE communication system. With reference to FIG. 1, one radio frame is 10 ms. The radio frame is divided into ten equally sized subframes. The subframe is divided into two equally sized slots. The first and sixth subframes contain a downlink synchronization signal per radio frame. The synchronization signals are classified into a primary synchronization signal (P-SS) and a secondary synchronization signal (S-SS).

Non-Patent Document 1 (Chapter 5) describes the decisions by 3GPP regarding the channel configuration in the LTE system. It is assumed that the same channel configuration is used in a closed subscriber group (CSG) cell as that of a non-CSG cell.

A physical broadcast channel (PBCH) is a channel for downlink transmission from a base station device (hereinafter may be simply referred to as a "base station") to a communication terminal device (hereinafter may be simply referred to as a "communication terminal") such as a user equipment device (hereinafter may be simply referred to as a "user equipment"). A BCH transport block is mapped to four subframes within a 40 ms interval. There is no explicit signaling indicating 40 ms timing.

A physical control format indicator channel (PCFICH) is a channel for downlink transmission from a base station to a communication terminal. The PCFICH notifies the number of orthogonal frequency division multiplexing (OFDM) symbols used for PDCCHs from the base station to the communication terminal. The PCFICH is transmitted per subframe.

A physical downlink control channel (PDCCH) is a channel for downlink transmission from a base station to a communication terminal. The PDCCH notifies of the resource allocation information for downlink shared channel (DL-SCH) being one of the transport channels described below, resource allocation information for a paging channel (PCH) being one of the transport channels described below, and hybrid automatic repeat request (HARQ) information related to DL-SCH. The PDCCH carries an uplink scheduling grant. The PDCCH carries acknowledgement (Ack) / negative acknowledgement (Nack) that is a response signal to uplink transmission. The PDCCH is referred to as an L1/L2 control signal as well.

A physical downlink shared channel (PDSCH) is a channel for downlink transmission from a base station to a communication terminal. A downlink shared channel (DL-SCH) that is a transport channel and a PCH that is a transport channel are mapped to the PDSCH.

A physical multicast channel (PMCH) is a channel for downlink transmission from a base station to a communication terminal. A multicast channel (MCH) that is a transport channel is mapped to the PMCH.

A physical uplink control channel (PUCCH) is a channel for uplink transmission from a communication terminal to a base station. The PUCCH carries Ack/Nack that is a response signal to downlink transmission. The PUCCH carries channel state information (CSI). The CSI includes a rank indicator (RI), a precoding matrix indicator (PMI), and a channel quality indicator (CQI) report. The RI is rank information of a channel matrix in the MIMO. The PMI is information of a precoding weight matrix to be used in the MIMO. The CQI is quality information indicating the quality of received data or channel quality. In addition, the PUCCH carries a scheduling request (SR).

A physical uplink shared channel (PUSCH) is a channel for uplink transmission from a communication terminal to a base station. An uplink shared channel (UL-SCH) that is one of the transport channels is mapped to the PUSCH.

A physical hybrid ARQ indicator channel (PHICH) is a channel for downlink transmission from a base station to a communication terminal. The PHICH carries Ack/Nack that is a response signal to uplink transmission. A physical random access channel (PRACH) is a channel for uplink transmission from the communication terminal to the base station. The PRACH carries a random access preamble.

A downlink reference signal (RS) is a known symbol in the LTE communication system. The following five types of downlink reference signals are defined as: a cell-specific reference signal (CRS), an MBSFN reference signal, a data demodulation reference signal (DM-RS) being a UE-specific reference signal, a positioning reference signal (PRS), and a channel state information reference signal (CSI-RS). The physical layer measurement objects of a communication terminal include reference signal received powers (RSRPs).

An uplink reference signal is also a known symbol in the LTE communication system. The following two types of uplink reference signals are defined, that is, a demodulation reference signal (DM-RS) and a sounding reference signal (SRS).

The transport channels described in Non-Patent Document 1 (Chapter 5) are described. A broadcast channel (BCH) among the downlink transport channels is broadcast to the entire coverage of a base station (cell). The BCH is mapped to the physical broadcast channel (PBCH).

Retransmission control according to a hybrid ARQ (HARQ) is applied to a downlink shared channel (DL-SCH). The DL-SCH can be broadcast to the entire coverage of the base station (cell). The DL-SCH supports dynamic or semi-static resource allocation. The semi-static resource allocation is also referred to as persistent scheduling. The DL-SCH supports discontinuous reception (DRX) of a communication terminal for enabling the communication terminal to save power. The DL-SCH is mapped to the physical downlink shared channel (PDSCH).

The paging channel (PCH) supports DRX of the communication terminal for enabling the communication terminal to save power. The PCH is required to be broadcast to the entire coverage of the base station (cell). The PCH is mapped to physical resources such as the physical downlink shared channel (PDSCH) that can be used dynamically for traffic.

The multicast channel (MCH) is used for broadcasting the entire coverage of the base station (cell). The MCH supports SFN combining of multimedia broadcast multicast service (MBMS) services (MTCH and MCCH) in multi-cell transmission. The MCH supports semi-static resource allocation. The MCH is mapped to the PMCH.

Retransmission control according to a hybrid ARQ (HARQ) is applied to an uplink shared channel (UL-SCH) among the uplink transport channels. The UL-SCH supports dynamic or semi-static resource allocation. The UL-SCH is mapped to the physical uplink shared channel (PUSCH).

A random access channel (RACH) is limited to control information. The RACH involves a collision risk. The RACH is mapped to the physical random access channel (PRACH).

The HARQ is described. The HARQ is the technique for improving the communication quality of a channel by combination of automatic repeat request (ARQ) and error correction (forward error correction). The HARQ is advantageous in that error correction functions effectively by retransmission even for a channel whose communication quality changes. In particular, it is also possible to achieve further quality improvement in retransmission through combination of the reception results of the first transmission and the reception results of the retransmission.

An example of the retransmission method is described. If the receiver fails to successfully decode the received data, in other words, if a cyclic redundancy check (CRC) error occurs (CRC = NG), the receiver transmits "Nack" to the transmitter. The transmitter that has received "Nack" retransmits the data. If the receiver successfully decodes the received data, in other words, if a CRC error does not occur (CRC = OK), the receiver transmits "Ack" to the transmitter. The transmitter that has received "Ack" transmits the next data.

The logical channels described in Non-Patent Document 1 (Chapter 6) are described. A broadcast control channel (BCCH) is a downlink channel for broadcast system control information. The BCCH that is a logical channel is mapped to the broadcast channel (BCH) or downlink shared channel (DL-SCH) that is a transport channel.

A paging control channel (PCCH) is a downlink channel for transmitting paging information and system information change notifications. The PCCH is used when the network does not know the cell location of a communication terminal. The PCCH that is a logical channel is mapped to the paging channel (PCH) that is a transport channel.

A common control channel (CCCH) is a channel for transmission control information between communication terminals and a base station. The CCCH is used in a case where the communication terminals have no RRC connection with the network. In the downlink direction, the CCCH is mapped to the downlink shared channel (DL-SCH) that is a transport channel. In the uplink direction, the CCCH is mapped to the uplink shared channel (UL-SCH) that is a transport channel.

A multicast control channel (MCCH) is a downlink channel for point-to-multipoint transmission. The MCCH is used for transmission of MBMS control information for one or several MTCHs from a network to a communication terminal. The MCCH is used only by a communication terminal during reception of the MBMS. The MCCH is mapped to the multicast channel (MCH) that is a transport channel.

A dedicated control channel (DCCH) is a channel that transmits dedicated control information between a communication terminal and a network on a point-to-point basis. The DCCH is used when the communication terminal has an RRC connection. The DCCH is mapped to the uplink shared channel (UL-SCH) in uplink and mapped to the downlink shared channel (DL-SCH) in downlink.

A dedicated traffic channel (DTCH) is a point-to-point communication channel for transmission of user information to a dedicated communication terminal. The DTCH exists in uplink as well as downlink. The DTCH is mapped to the uplink shared channel (UL-SCH) in uplink and mapped to the downlink shared channel (DL-SCH) in downlink.

A multicast traffic channel (MTCH) is a downlink channel for traffic data transmission from a network to a communication terminal. The MTCH is a channel used only by a communication terminal during reception of the MBMS. The MTCH is mapped to the multicast channel (MCH).

CGI represents a cell global identifier. ECGI represents an E-UTRAN cell global identifier. A closed subscriber group (CSG) cell is introduced into the LTE, and the long term evolution advanced (LTE-A) and universal mobile telecommunication system (UMTS) described below.

The locations of communication terminals are tracked based on an area composed of one or more cells. The locations are tracked for enabling tracking the locations of communication terminals and calling communication terminals, in other words, incoming calling to communication terminals even in an idle state. An area for tracking locations of communication terminals is referred to as a tracking area.

Further, specifications of long term evolution advanced (LTE-A) are pursued as Release 10 in 3GPP (see Non-Patent Documents 3 and 4). The LTE-A is based on the LTE radio communication system and is configured by adding several new techniques to the system.

Carrier aggregation (CA) is studied for the LTE-A system in which two or more component carriers (CCs) are aggregated to support wider transmission bandwidths up to 100 MHz. Non-Patent Document 1 describes the CA.

In a case where CA is configured, a user equipment (UE) has a single RRC connection with a network (NW). In RRC connection, one serving cell provides NAS mobility information and security input. This cell is referred to as a primary cell (PCell). In downlink, a carrier corresponding to PCell is a downlink primary component carrier (DL PCC). In uplink, a carrier corresponding to PCell is an uplink primary component carrier (UL PCC).

A secondary cell (SCell) is configured to form a serving cell group with a PCell, in accordance with the UE capability. In downlink, a carrier corresponding to SCell is a downlink secondary component carrier (DL SCC). In uplink, a carrier corresponding to SCell is an uplink secondary component carrier (UL SCC).

A serving cell group of one PCell and one or more SCells is configured for one UE.

The new techniques in the LTE-A include the technique of supporting wider bands (wider bandwidth extension) and the coordinated multiple point transmission and reception (CoMP) technique. The CoMP studied for LTE-A in 3GPP is described in Non-Patent Document 1.

Furthermore, the use of small eNBs (hereinafter also referred to as "small-scale base station devices") configuring small cells is studied in 3GPP to satisfy tremendous traffic in the future. In an example technique under study, a large number of small eNBs is installed to configure a large number of small cells, which increases spectral efficiency and communication capacity. The specific techniques include dual connectivity (abbreviated as DC) with which a UE communicates with two eNBs through connection thereto. Non-Patent Document 1 describes the DC.

For eNBs that perform dual connectivity (DC), one may be referred to as a master eNB (abbreviated as MeNB), and the other may be referred to as a secondary eNB (abbreviated as SeNB).

The traffic flow of a mobile network is on the rise, and the communication rate is also increasing. It is expected that the communication rate is further increased when the operations of the LTE and the LTE-A are fully initiated.

For increasingly enhanced mobile communications, the fifth generation (hereinafter also referred to as "5G") radio access system is studied whose service is aimed to be launched in 2020 and afterward. For example, in the Europe, an organization named METIS summarizes the requirements for 5G (see Non-Patent Document 5).

The requirements in the 5G radio access system show that a system capacity shall be 1000 times as high as, a data transmission rate shall be 100 times as high as, a data latency shall be one tenth (1/10) as low as, and simultaneously connected communication terminals 100 times as many as those of the LTE system, to further reduce the power consumption and device cost.

To satisfy such requirements, the study of 5G standards is pursued as Release 15 in 3GPP (see Non-Patent Documents 6 to 18). The techniques on 5G radio sections are referred to as "New Radio Access Technology" ("New Radio" is abbreviated as NR).

The NR system has been studied based on the LTE system and the LTE-A system. The NR system includes additions and changes from the LTE system and the LTE-A system in the following points.

As the access schemes of the NR, the orthogonal frequency division multiplexing (OFDM) is used in the downlink direction, and the OFDM and the DFT-spread-OFDM (DFT-s-OFDM) are used in the uplink direction.

In NR, frequencies higher than those in the LTE are available for increasing the transmission rate and reducing the latency.

In NR, a cell coverage is maintained by forming a transmission/reception range shaped like a narrow beam (beamforming) and also changing the orientation of the beam (beam sweeping).

In NR, various subcarrier spacings, that is, various numerologies are supported.

Regardless of the numerologies, 1 subframe is 1 millisecond long, and 1 slot consists of 14 symbols in NR. Furthermore, the number of slots in 1 subframe is one in a numerology at a subcarrier spacing of 15 kHz. The number of slots increases in proportion to the subcarrier spacing in the other numerologies (see Non-Patent Document 13 (TS38.211 v15.3.0)).

The base station transmits a downlink synchronization signal in NR as synchronization signal burst (may be hereinafter referred to as SS burst) with a predetermined period for a predetermined duration. The SS burst includes synchronization signal blocks (may be hereinafter referred to as SS blocks) for each beam of the base station. The base station transmits the SS blocks for each beam during the duration of the SS burst with the beam changed. The SS blocks include the P-SS, the S-SS, and the PBCH.

In NR, addition of a phase tracking reference signal (PTRS) as a downlink reference signal has reduced the influence of phase noise. The PTRS has also been added as an uplink reference signal similarly to the downlink.

In NR, a slot format indication (SFI) has been added to information included in the PDCCH for flexibly switching between the DL and the UL in a slot.

Also in NR, the base station preconfigures, for the UE, a part of a carrier frequency band (may be hereinafter referred to as a Bandwidth Part (BWP)). Then, the UE performs transmission and reception with the base station in the BWP. Consequently, the power consumption in the UE is reduced.

The DC patterns studied in 3GPP include the DC to be performed between an LTE base station and an NR base station that are connected to the EPC, the DC to be performed by the NR base stations that are connected to the 5G core system, and the DC to be performed between the LTE base station and the NR base station that are connected to the 5G core system (see Non-Patent Documents 12, 16, and 19).

### Prior Art Documents

### Patent Documents

Patent Document 1: Japanese Patent Application Laid-Open JP 2015-185954 A (page 6, FIG. 6)

### Non-Patent Documents

Non-Patent Document 1: 3GPP TS 36.300 V15.3.0
Non-Patent Document 2: 3GPP S1-083461
Non-Patent Document 3: 3GPP TR 36.814 V9.2.0
Non-Patent Document 4: 3GPP TR 36.912 V15.0.0
Non-Patent Document 5: "Scenarios, requirements and KPIs for 5G mobile and wireless system", ICT-317669-METIS/D1.1
Non-Patent Document 6: 3GPP TR 23.799 V14.0.0
Non-Patent Document 7: 3GPP TR 38.801 V14.0.0
Non-Patent Document 8: 3GPP TR 38.802 V14.2.0
Non-Patent Document 9: 3GPP TR 38.804 V14.0.0
Non-Patent Document 10: 3GPP TR 38.912 V15.0.0
Non-Patent Document 11: 3GPP RP-172115
Non-Patent Document 12: 3GPP TS 37.340 V15.3.0
Non-Patent Document 13: 3GPP TS 38.211 V15.3.0
Non-Patent Document 14: 3GPP TS 38.212 V15.3.0
Non-Patent Document 15: 3GPP TS 38.213 V15.3.0
Non-Patent Document 16: 3GPP TS 38.214 V15.3.0
Non-Patent Document 17: 3GPP TS 38.300 V15.3.1
Non-Patent Document 18: 3GPP TS 38.331 V15.3.0
Non-Patent Document 19: 3GPP RP-161266

### Summary

### Problem to be Solved by the Invention

The gNB forms directional beams by using a multi-element antenna or the like. The directional beam includes a main lobe and side lobes. Depending on a positional relationship between the UE and the gNB, received power and received quality of the side lobe of a certain directional beam may be detected to be a value higher than the value of the main lobe of another directional beam.

A conventional method in which the UE in an RRC_IDLE or RRC_INACTIVE state selects a beam does not take a difference of the characteristics between the main lobe and the side lobe into consideration. Thus, when the UE measures the received power and the received quality of the side lobe as a high value, the UE may select a beam of the side lobe, specifically, a beam whose main lobe is not radiated to the position of the UE itself.

However, because the side lobe has a smaller beam width and radiation area than those of the main lobe, the side lobe has a smaller distance before the UE leaves from the radiation area when the UE moves. Thus, there is a problem in that, when the UE moves while the UE performs transmission and reception by selecting the beam of the side lobe, communication is not correctly completed due to leaving of the UE from the radiation area.

The present invention is made in order to solve the problem described above, and has an object to prevent failure of communication due to leaving of a communication terminal from a radiation range of a beam selected by the communication terminal.

### Means to Solve the Problem

A communication system according to the present invention includes: a base station configured to transmit a plurality of directional beams being different from each other; and a communication terminal configured to perform radio communication with the base station by using a beam for communication selected from the plurality of directional beams. An information block transmitted by the base station includes, regarding each of the plurality of directional beams, neighboring beam information indicating neighboring beams being adjacent to each of the plurality of directional beams. The communication terminal selects the beam for communication, based on the neighboring beam information.

### Effects of the Invention

According to the communication system of the present invention, the information block transmitted by the base station includes, regarding each of the plurality of directional beams, neighboring beam information indicating neighboring beams being adjacent to each of the plurality of directional beams. The communication terminal selects the beam for communication, based on the neighboring beam information. Therefore, the communication terminal can select a beam of the main lobe as the beam for communication. Thus, even when the communication terminal moves during data communication, the frequency that the communication terminal fails in communication due to leaving of the communication terminal from the radiation range of the selected beam can be lowered.

### Brief Description of Drawings

FIG. 1 is a diagram illustrating the configuration of a radio frame for use in an LTE communication system.
FIG. 2 is a block diagram showing the overall configuration of an LTE communication system 200 under discussion of 3GPP.
FIG. 3 is a block diagram illustrating an overall configuration of a NR communication system 210 that has been discussed in 3GPP.
FIG. 4 illustrates a structure of the DC to be performed by an eNB and a gNB that are connected to the EPC.
FIG. 5 illustrates a structure of the DC to be performed by gNBs that are connected to the NG core.
FIG. 6 illustrates a structure of the DC to be performed by the eNB and the gNB that are connected to the NG core.
FIG. 7 illustrates a structure of the DC to be performed by the eNB and the gNB that are connected to the NG core.
FIG. 8 is a block diagram showing the configuration of a user equipment 202 shown in FIG. 2.
FIG. 9 is a block diagram showing the configuration of a base station 203 shown in FIG. 2.
FIG. 10 is a block diagram showing the configuration of an MME.
FIG. 11 is a block diagram illustrating a configuration of the 5GC.
FIG. 12 is a flowchart showing an outline of a cell search performed by a UE.
FIG. 13 illustrates an example structure of a cell in an NR system.
FIG. 14 is a diagram illustrating a sequence example until the UE selects a beam of the gNB and establishes a communication path.
FIG. 15 is a diagram illustrating a disposition example of radiation areas of directional beams.
FIG. 16 is a diagram illustrating an example of radiation patterns of directional beams.
FIG. 17 is a diagram illustrating an example of radiation areas of directional beams.
FIG. 18 is a diagram illustrating a measurement result example of each beam.
FIG. 19 is a sequence diagram illustrating a beam reselection procedure in consideration of measurement results of neighboring beams.
FIG. 20 is a diagram illustrating an example of neighboring beam information in a list format.
FIG. 21 is a diagram illustrating an example of neighboring beam information in a bitmap format.
FIG. 22 is a diagram illustrating difference of widths of radiation ranges of beams at positions far from and close to the gNB.
FIG. 23 is a sequence diagram illustrating a beam reselection procedure in consideration of measurement results of neighboring beams and a propagation attenuation amount of an RS signal.
FIG. 24 is a flowchart illustrating a conventional measurement result report procedure in the UE.
FIG. 25 is a flowchart illustrating a conventional measurement result report procedure in the UE in consideration of measurement results of neighboring beams.

### Description of Embodiments

### The first embodiment

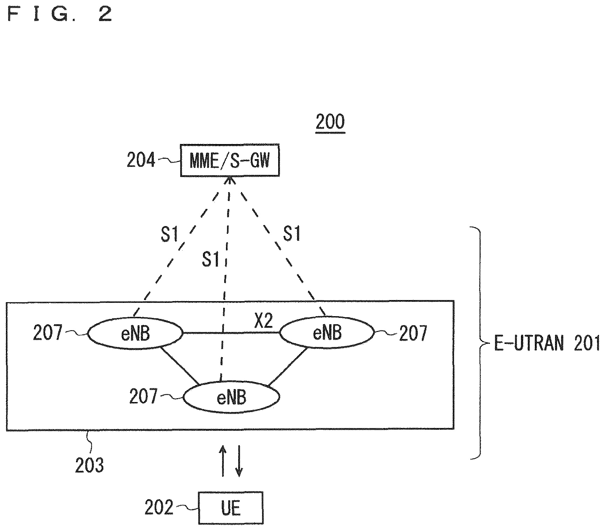

FIG. 2 is a block diagram showing an overall configuration of an LTE communication system 200 which is under discussion of 3GPP. FIG. 2 is described here. A radio access network is referred to as an evolved universal terrestrial radio access network (E-UTRAN) 201. A user equipment device (hereinafter, referred to as a "user equipment (UE)") 202 that is a communication terminal device is capable of radio communication with a base station device (hereinafter, referred to as a "base station (E-UTRAN Node B: eNB)") 203 and transmits and receives signals through radio communication.

Here, the "communication terminal device" covers not only a user equipment device such as a mobile phone terminal device, but also an unmovable device such as a sensor. In the following description, the "communication terminal device" may be simply referred to as a "communication terminal".

The E-UTRAN is composed of one or a plurality of base stations 203, provided that a control protocol for the user equipment 202 such as a radio resource control (RRC), and user planes (hereinafter also referred to as "U-planes") such as a packet data convergence protocol (PDCP), radio link control (RLC), medium access control (MAC), or physical layer (PHY) are terminated in the base station 203.

The control protocol radio resource control (RRC) between the user equipment 202 and the base station 203 performs, for example, broadcast, paging, and RRC connection management. The states of the base station 203 and the user equipment 202 in RRC are classified into RRC_IDLE and RRC CONNECTED.

In RRC _IDLE, public land mobile network (PLMN) selection, system information (SI) broadcast, paging, cell reselection, mobility, and the like are performed. In RRC _ CONNECTED, the user equipment has RRC connection and is capable of transmitting and receiving data to and from a network. In RRC _ CONNECTED, for example, handover (HO) and measurement of a neighbor cell are performed.

The base stations 203 includes one or more eNBs 207. A system, composed of an evolved packet core (EPC) being a core network and an E-UTRAN 201 being a radio access network, is referred to as an evolved packet system (EPS). The EPC being a core network and the E-UTRAN 201 being a radio access network may be collectively referred to as a "network".

The eNB 207 is connected to an MME/S-GW unit (hereinafter, also referred to as an "MME unit") 204 including a mobility management entity (MME), a serving gateway (S-GW) or an MME and an S-GW by means of an S1 interface, and control information is communicated between the eNB 207 and the MME unit 204. A plurality of MME units 204 may be connected to one eNB 207. The eNBs 207 are connected to each other by means of an X2 interface, and control information is communicated between the eNBs 207.

The MME unit 204 is a high-level device, specifically, a high-level node, and controls connection between the user equipment (UE) 202 and the eNBs 207 comprising a base station. The MME unit 204 configures the EPC that is a core network. The base station 203 configures the E-UTRAN 201.

The base station 203 may configure one or more cells. Each of the cells has a predefined range as a coverage that is a range in which communication with the user equipment 202 is possible, and performs radio communication with the user equipment 202 within the coverage. When the one base station 203 configures a plurality of cells, each of the cells is configured to communicate with the user equipment 202.

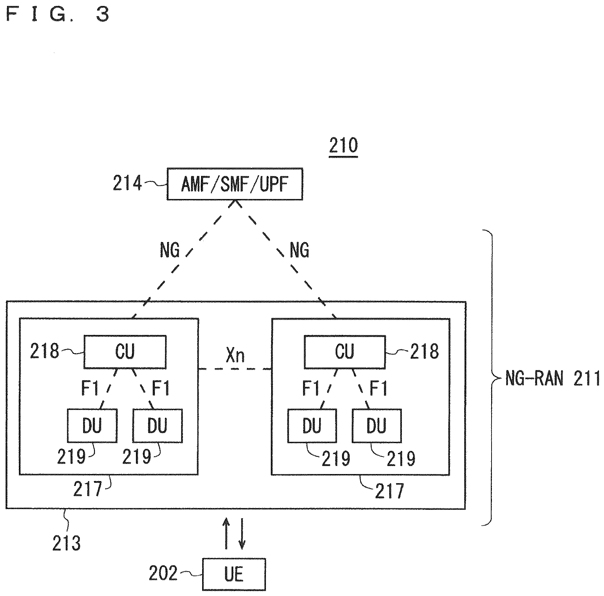

FIG. 3 is a block diagram illustrating an overall configuration of a 5G communication system 210 that has been discussed in 3GPP. FIG. 3 is described. A radio access network is referred to as a next generation radio access network (NG-RAN) 211. The UE 202 can perform radio communication with an NR base station device (hereinafter referred to as a "NG-RAN NodeB (gNB)") 213, and transmits and receives signals to and from the NR base station device 213 via radio communication. Furthermore, the core network is referred to as a 5G Core (5GC).

When control protocols for the UE 212, for example, Radio Resource Control (RRC) and user planes (may be hereinafter referred to as U-Planes), e.g., Service Data Adaptation Protocol (SDAP), Packet Data Convergence Protocol (PDCP), Radio Link Control (RLC), Medium Access Control (MAC), and Physical Layer (PHY) are terminated in the NR base station 213, one or more NR base stations 213 configure the NG-RAN.

The functions of the control protocol of the Radio Resource Control (RRC) between the UE 202 and the NR base station 213 are identical to those in LTE. The states of the NR base station 213 and the UE 202 in RRC include RRC_IDLE, RRC CONNECTED, and RRC _INACTIVE.

RRC_IDLE and RRC _CONNECTED are identical to those in LTE. In RRC _INACTIVE, for example, broadcast of system information (SI), paging, cell reselection, and mobility are performed while the connection between the 5G Core and the NR base station 213 is maintained.

Through an NG interface, gNBs 217 are connected to the Access and Mobility Management Function (AMF), the Session Management Function (SMF), the User Plane Function (UPF), or an AMF/SMF/UPF unit (may be hereinafter referred to as a 5GC unit) 214 including the AMF, the SMF, and the UPF. The control information and/or user data are communicated between each of the gNBs 217 and the 5GC unit 214. The NG interface is a generic name for an N2 interface between the gNBs 217 and the AMF, an N3 interface between the gNBs 217 and the UPF, an N11 interface between the AMF and the SMF, and an N4 interface between the UPF and the SMF. A plurality of the 5GC units 214 may be connected to one of the gNBs 217. The gNBs 217 are connected through an Xn interface, and the control information and/or user data are communicated between the gNBs 217.

The NR base station 213 may configure one or more cells in the same manner as the base station 203. When the one NR base station 213 configures a plurality of cells, each of the cells is configured to communicate with the UE 202.

Each of the gNBs 217 may be divided into a Central Unit (may be hereinafter referred to as a CU) 218 and Distributed Units (may be hereinafter referred to as DUs) 219. The one CU 218 is configured in the gNB 217. The number of the DUs 219 configured in the gNB 217 is one or more. The CU 218 is connected to the DUs 219 via an F1 interface, and the control information and/or user data are communicated between the CU 218 and each of the DUs 219.

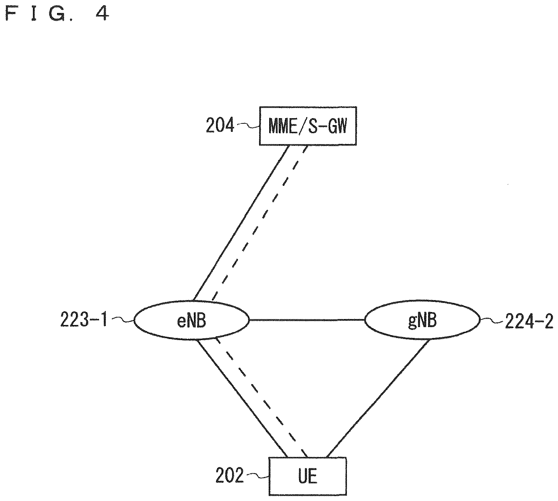

FIG. 4 illustrates a structure of the DC to be performed by an eNB and a gNB that are connected to the EPC. In FIG. 4, solid lines represent connection to the U-planes, and dashed lines represent connection to the C-planes. In FIG. 4, an eNB 223-1 becomes a master base station, and a gNB 224-2 becomes a secondary base station (this DC structure may be referred to as EN-DC). Although FIG. 4 illustrates an example U-Plane connection between the MME unit 204 and the gNB 224-2 through the eNB 223-1, the U-Plane connection may be established directly between the MME unit 204 and the gNB 224-2.

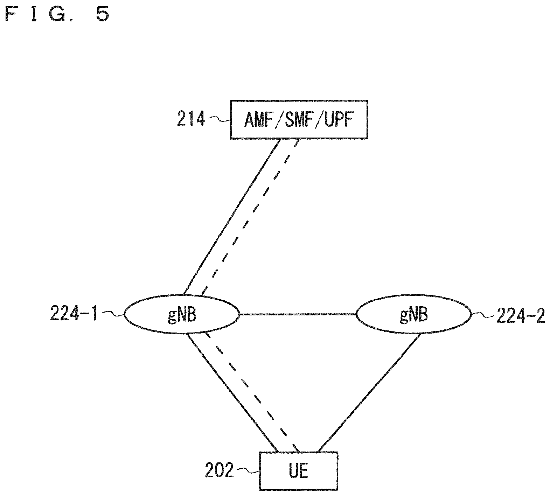

FIG. 5 illustrates a structure of the DC to be performed by gNBs that are connected to the NG core. In FIG. 5, solid lines represent connection to the U-planes, and dashed lines represent connection to the C-planes. In FIG. 5, a gNB 224-1 becomes a master base station, and the gNB 224-2 becomes a secondary base station (this DC structure may be referred to as NR-DC). Although FIG. 5 illustrates an example U-Plane connection between the 5GC unit 214 and the gNB 224-2 through the gNB 224-1, the U-Plane connection may be established directly between the 5GC unit 214 and the gNB 224-2.

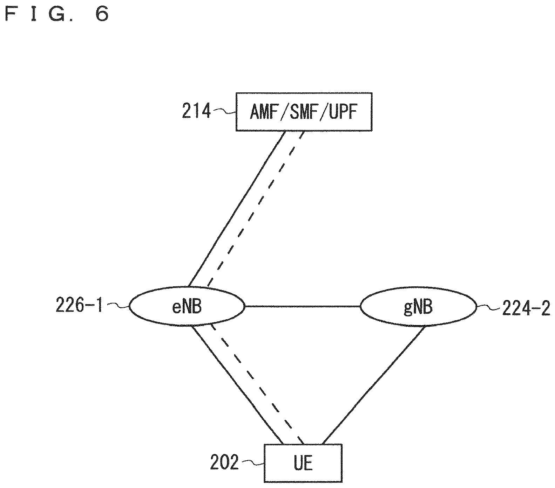

FIG. 6 illustrates a structure of the DC to be performed by an eNB and a gNB that are connected to the NG core. In FIG. 6, solid lines represent connection to the U-planes, and dashed lines represent connection to the C-planes. In FIG. 6, an eNB 226-1 becomes a master base station, and the gNB 224-2 becomes a secondary base station (this DC structure may be referred to as NG-EN-DC). Although FIG. 6 illustrates an example U-Plane connection between the 5GC unit 214 and the gNB 224-2 through the eNB 226-1, the U-Plane connection may be established directly between the 5GC unit 214 and the gNB 224-2.

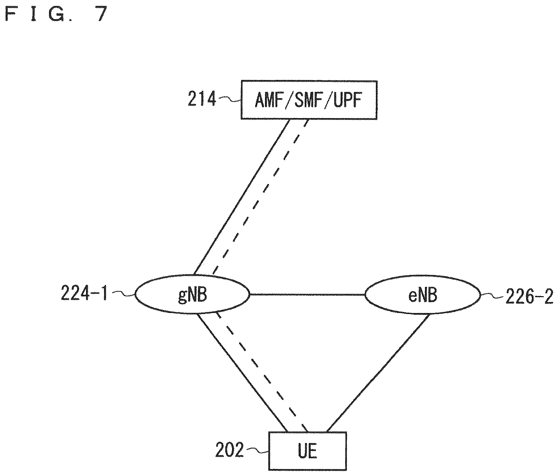

FIG. 7 illustrates another structure of the DC to be performed by an eNB and a gNB that are connected to the NG core. In FIG. 7, solid lines represent connection to the U-planes, and dashed lines represent connection to the C-planes. In FIG. 7, the gNB 224-1 becomes a master base station, and an eNB 226-2 becomes a secondary base station (this DC structure may be referred to as NE-DC). Although FIG. 7 illustrates an example U-Plane connection between the 5GC unit 214 and the eNB 226-2 through the gNB 224-1, the U-Plane connection may be established directly between the 5GC unit 214 and the eNB 226-2.

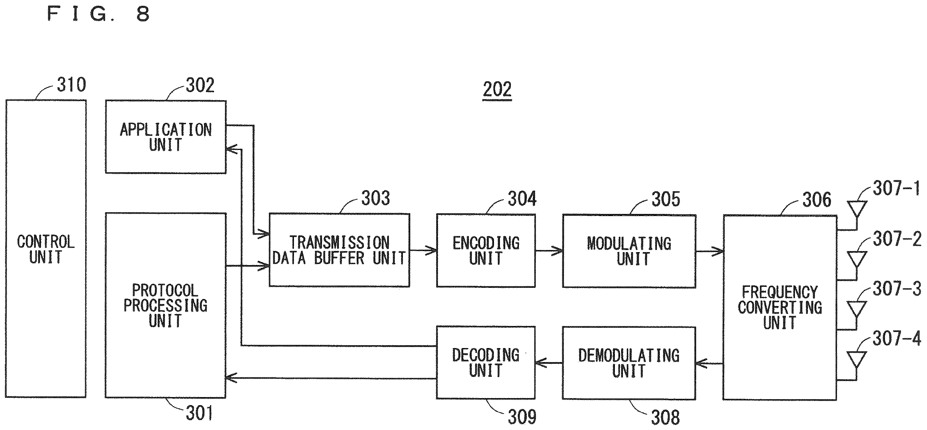

FIG. 8 is a block diagram showing the configuration of the user equipment 202 of FIG. 2. The transmission process of the user equipment 202 shown in FIG. 8 is described. First, a transmission data buffer unit 303 stores the control data from a protocol processing unit 301 and the user data from an application unit 302. The data stored in the transmission data buffer unit 303 is passed to an encoding unit 304, and is subjected to an encoding process such as error correction. There may exist the data output from the transmission data buffer unit 303 directly to a modulating unit 305 without the encoding process.

The data encoded by the encoding unit 304 is modulated by the modulating unit 305. The modulating unit 305 may perform precoding in the MIMO. The modulated data is converted into a baseband signal, and the baseband signal is output to a frequency converting unit 306 and is then converted into a radio transmission frequency. After that, transmission signals are transmitted from antennas 307-1 to 307-4 to the base station 203. Although FIG. 8 exemplifies a case where the number of antennas is four, the number of antennas is not limited to four.

The user equipment 202 executes the reception process as follows. The radio signal from the base station 203 is received through each of the antennas 307-1 to 307-4. The received signal is converted from a radio reception frequency into a baseband signal by the frequency converting unit 306 and is then demodulated by a demodulating unit 308. The demodulating unit 308 may calculate a weight and perform a multiplication operation. The demodulated data is passed to a decoding unit 309, and is subjected to a decoding process such as error correction.

Among the pieces of decoded data, the control data is passed to the protocol processing unit 301, and the user data is passed to the application unit 302. A series of processes by the user equipment 202 is controlled by a control unit 310. This means that, though not shown in FIG. 8, the control unit 310 is connected to the individual units 301 to 309. In FIG. 8, the number of antennas for transmission of the user equipment 202 may be identical to or different from that for its reception.

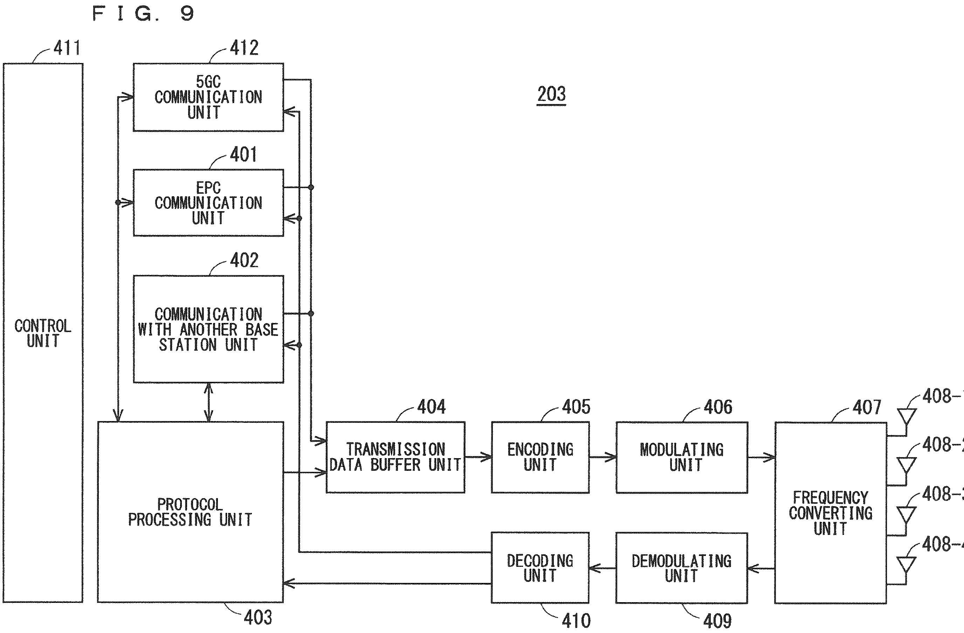

FIG. 9 is a block diagram showing the configuration of the base station 203 of FIG. 2. The transmission process of the base station 203 shown in FIG. 9 is described. An EPC communication unit 401 performs data transmission and reception between the base station 203 and the EPC (such as the MME unit 204). A 5GC communication unit 412 transmits and receives data between the base station 203 and the 5GC (e.g., the 5GC unit 214). A communication with another base station unit 402 performs data transmission and reception to and from another base station. The EPC communication unit 401, the 5GC communication unit 412, and the communication with another base station unit 402 each transmit and receive information to and from a protocol processing unit 403. The control data from the protocol processing unit 403, and the user data and the control data from the EPC communication unit 401, the 5GC communication unit 412, and the communication with another base station unit 402 are stored in a transmission data buffer unit 404.

The data stored in the transmission data buffer unit 404 is passed to an encoding unit 405, and then an encoding process such as error correction is performed for the data. There may exist the data output from the transmission data buffer unit 404 directly to a modulating unit 406 without the encoding process. The encoded data is modulated by the modulating unit 406. The modulating unit 406 may perform precoding in the MIMO. The modulated data is converted into a baseband signal, and the baseband signal is output to a frequency converting unit 407 and is then converted into a radio transmission frequency. After that, transmission signals are transmitted from antennas 408-1 to 408-4 to one or a plurality of user equipments 202. Although FIG. 9 exemplifies a case where the number of antennas is four, the number of antennas is not limited to four.

The reception process of the base station 203 is executed as follows. A radio signal from one or a plurality of user equipments 202 is received through the antenna 408. The received signal is converted from a radio reception frequency into a baseband signal by the frequency converting unit 407, and is then demodulated by a demodulating unit 409. The demodulated data is passed to a decoding unit 410 and then subject to a decoding process such as error correction.

Among the pieces of decoded data, the control data is passed to the protocol processing unit 403, the 5GC communication unit 412, the EPC communication unit 401, or the communication with another base station unit 402, and the user data is passed to the 5GC communication unit 412, the EPC communication unit 401 and the communication with another base station unit 402. A series of processes by the base station 203 is controlled by a control unit 411. This means that, though not shown in FIG. 9, the control unit 411 is connected to the individual units 401 to 410. In FIG. 9, the number of antennas for transmission of the base station 203 may be identical to or different from that for its reception.

Although FIG. 9 is the block diagram illustrating the configuration of the base station 203, the base station 213 may have the same configuration. Furthermore, in FIGS. 8 and 9, the number of antennas of the user equipment 202 may be identical to or different from that of the base station 203.

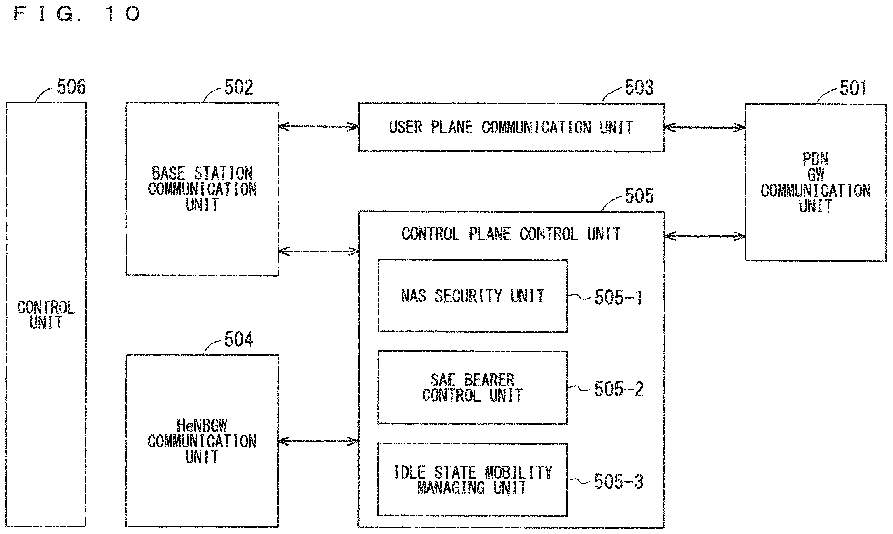

FIG. 10 is a block diagram showing the configuration of the MME. FIG. 10 shows the configuration of an MME 204a included in the MME unit 204 shown in FIG. 2 described above. A PDN GW communication unit 501 performs data transmission and reception between the MME 204a and the PDN GW. A base station communication unit 502 performs data transmission and reception between the MME 204a and the base station 203 by means of the S1 interface.

In a case where the data received from the PDN GW is user data, the user data is passed from the PDN GW communication unit 501 to the base station communication unit 502 via a user plane communication unit 503 and is then transmitted to one or a plurality of base stations 203. In a case where the data received from the base station 203 is user data, the user data is passed from the base station communication unit 502 to the PDN GW communication unit 501 via the user plane communication unit 503 and is then transmitted to the PDN GW.

In a case where the data received from the PDN GW is control data, the control data is passed from the PDN GW communication unit 501 to a control plane control unit 505. In a case where the data received from the base station 203 is control data, the control data is passed from the base station communication unit 502 to the control plane control unit 505.

The control plane control unit 505 includes a NAS security unit 505-1, an SAE bearer control unit 505-2, and an idle state mobility management unit 505-3, and performs an overall process for the control plane (hereinafter also referred to as a "C-plane"). The NAS security unit 505-1 provides, for example, security of a non-access stratum (NAS) message. The SAE bearer control unit 505-2 manages, for example, a system architecture evolution (SAE) bearer.

The idle state mobility management unit 505-3 performs, for example, mobility management of an idle state (LTE-IDLE state which is merely referred to as idle as well), generation and control of a paging signal in the idle state, addition, deletion, update, and search of a tracking area of one or a plurality of user equipments 202 being served thereby, and tracking area list management.

The MME 204a distributes a paging signal to one or a plurality of base stations 203. In addition, the MME 204a performs mobility control of an idle state. When the user equipment is in the idle state and an active state, the MME 204a manages a list of tracking areas. The MME 204a begins a paging protocol by transmitting a paging message to the cell belonging to a tracking area in which the UE is registered. The idle state mobility management unit 505-3 may manage the CSG of the eNBs 207 to be connected to the MME 204a, CSG IDs, and a whitelist.

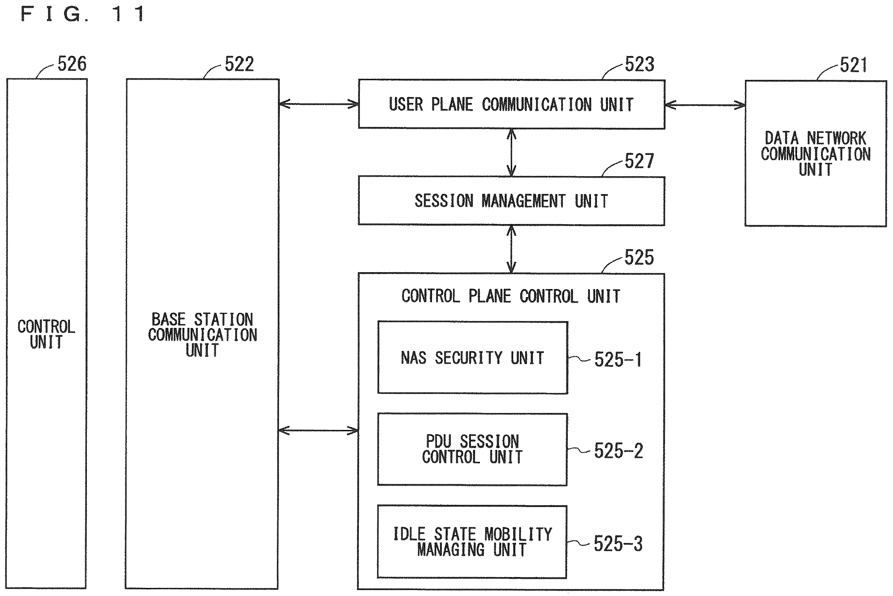

FIG. 11 is a block diagram illustrating a configuration of the 5GC. FIG. 11 illustrates a configuration of the 5GC unit 214 in FIG. 3. FIG. 11 illustrates a case where the 5GC unit 214 in FIG. 5 includes configurations of the AMF, the SMF, and the UPF. A data network communication unit 521 transmits and receives data between the 5GC unit 214 and a data network. A base station communication unit 522 transmits and receives data via the S1 interface between the 5GC unit 214 and the base station 203 and/or via the NG interface between the 5GC unit 214 and the base station 213.

When the data received through the data network is user data, the data network communication unit 521 passes the user data to the base station communication unit 522 through a user plane communication unit 523 to transmit the user data to one or more base stations, specifically, the base station 203 and/or the base station 213. When the data received from the base station 203 and/or the base station 213 is user data, the base station communication unit 522 passes the user data to the data network communication unit 521 through the user plane communication unit 523 to transmit the user data to the data network.

When the data received from the data network is control data, the data network communication unit 521 passes the control data through the user plane communication unit 523 to a session management unit 527. The session management unit 527 passes the control data to a control plane control unit 525. When the data received from the base station 203 and/or the base station 213 is control data, the base station communication unit 522 passes the control data to the control plane control unit 525. The control plane control unit 525 passes the control data to the session management unit 527.

The control plane control unit 525 includes, for example, a NAS security unit 525-1, a PDU session control unit 525-2, and an idle state mobility management unit 525-3, and performs overall processes on the control planes (may be hereinafter referred to as C-Planes). The NAS security unit 525-1, for example, provides security for a Non-Access Stratum (NAS) message. The PDU session control unit 525-2, for example, manages a PDU session between the user equipment 202 and the 5GC unit 214. The idle state mobility management unit 525-3, for example, manages mobility of an idle state (an RRC _IDLE state or simply referred to as idle), generates and controls paging signals in the idle state, and adds, deletes, updates, and searches for tracking areas of one or more user equipments 202 being served thereby, and manages a tracking area list.

The 5GC unit 214 distributes the paging signals to one or more base stations, specifically, the base station 203 and/or the base station 213. Furthermore, the 5GC unit 214 controls mobility of the idle state. The 5GC unit 214 manages the tracking area list when a user equipment is in an idle state, an inactive state, and an active state. The 5GC unit 214 starts a paging protocol by transmitting a paging message to a cell belonging to a tracking area in which the UE is registered.

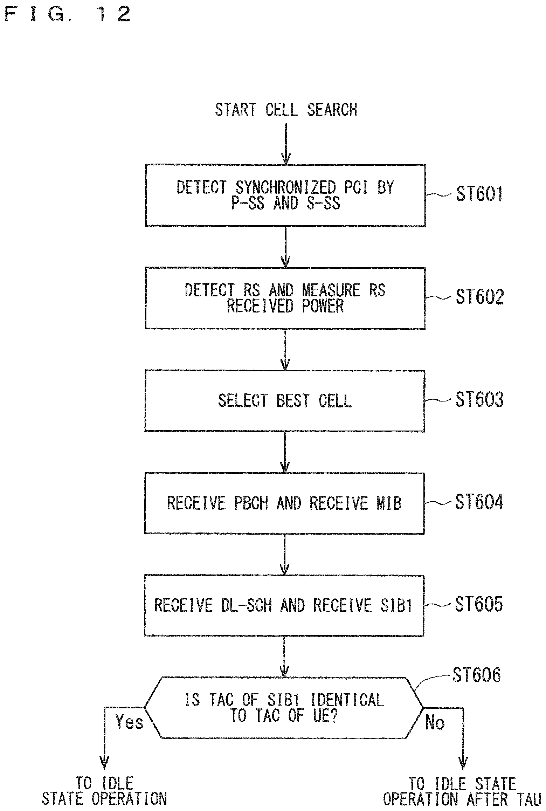

An example of a cell search method in a mobile communication system is described next. FIG. 12 is a flowchart showing an outline from a cell search to an idle state operation performed by a communication terminal (UE) in the LTE communication system. When starting a cell search, in Step ST601, the communication terminal synchronizes slot timing and frame timing by a primary synchronization signal (P-SS) and a secondary synchronization signal (S-SS) transmitted from a neighbor base station.

The P-SS and S-SS are collectively referred to as a synchronization signal (SS). Synchronization codes, which correspond one-to-one to PCIs assigned per cell, are assigned to the synchronization signals (SSs). The number of PCIs is currently studied in 504 ways. The 504 ways of PCIs are used for synchronization, and the PCIs of the synchronized cells are detected (specified).

In Step ST602, next, the user equipment detects a cell-specific reference signal (CRS) being a reference signal (RS) transmitted from the base station per cell and measures the reference signal received power (RSRP). The codes corresponding one-to-one to the PCIs are used for the reference signal RS. Separation from another cell is enabled by correlation using the code. The code for RS of the cell is calculated from the PCI specified in step ST601, so that the RS can be detected and the RS received power can be measured.

In Step ST603, next, the user equipment selects the cell having the best RS received quality, for example, the cell having the highest RS received power, that is, the best cell, from one or more cells that have been detected up to Step ST602.

In Step ST604, next, the user equipment receives the PBCH of the best cell and obtains the BCCH that is the broadcast information. A master information block (M1B) containing the cell configuration information is mapped to the BCCH over the PBCH. Accordingly, the MIB is obtained by obtaining the BCCH through reception of the PBCH. Examples of the MIB information include the downlink (DL) system bandwidth (also referred to as a transmission bandwidth configuration (dl-bandwidth)), the number of transmission antennas, and a system frame number (SFN).

In Step ST605, next, the user equipment receives the DL-SCH of the cell based on the cell configuration information of the MIB, to thereby obtain a system information block (SIB) 1 of the broadcast information BCCH. The SIB1 contains the information about the access to the cell, information about cell selection, and scheduling information on another SIB (SIBk; k is an integer equal to or greater than two). In addition, the SIB1 contains a tracking area code (TAC).

In Step ST606, next, the communication terminal compares the TAC of the SIB1 received in Step ST605 with the TAC portion of a tracking area identity (TAI) in the tracking area list that has already been possessed by the communication terminal. The tracking area list is also referred to as a TAI list. TAI is the identification information for identifying tracking areas and is composed of a mobile country code (MCC), a mobile network code (MNC), and a tracking area code (TAC). MCC is a country code. MNC is a network code. TAC is the code number of a tracking area.

If the result of the comparison of Step ST606 shows that the TAC received in Step ST605 is identical to the TAC included in the tracking area list, the user equipment enters an idle state operation in the cell. If the comparison shows that the TAC received in Step ST605 is not included in the tracking area list, the communication terminal requires a core network (EPC) including MME to change a tracking area through the cell for performing tracking area update (TAU).

Although FIG. 12 exemplifies the operations from the cell search to the idle state in LTE, the best beam may be selected in NR in addition to the best cell in Step ST603. In NR, information on a beam, for example, an identifier of the beam may be obtained in Step ST604. Furthermore, scheduling information on the Remaining Minimum SI (RMSI) in NR may be obtained in Step ST604. The RMSI in NR may be obtained in Step ST605.

The device configuring a core network (hereinafter, also referred to as a "core-network-side device") updates the tracking area list based on an identification number (such as UE-ID) of a communication terminal transmitted from the communication terminal together with a TAU request signal. The core-network-side device transmits the updated tracking area list to the communication terminal. The communication terminal rewrites (updates) the TAC list of the communication terminal based on the received tracking area list. After that, the communication terminal enters the idle state operation in the cell.

Widespread use of smartphones and tablet terminal devices explosively increases traffic in cellular radio communications, causing a fear of insufficient radio resources all over the world. To increase spectral efficiency, thus, it is studied to downsize cells for further spatial separation.

In the conventional configuration of cells, the cell configured by an eNB has a relatively-wide-range coverage. Conventionally, cells are configured such that relatively-wide-range coverages of a plurality of cells configured by a plurality of macro eNBs cover a certain area.

When cells are downsized, the cell configured by an eNB has a narrow-range coverage compared with the coverage of a cell configured by a conventional eNB. Thus, in order to cover a certain area as in the conventional case, a larger number of downsized eNBs than the conventional eNBs are required.

In the description below, a "macro cell" refers to a cell having a relatively wide coverage, such as a cell configured by a conventional eNB, and a "macro eNB" refers to an eNB configuring a macro cell. A "small cell" refers to a cell having a relatively narrow coverage, such as a downsized cell, and a "small eNB" refers to an eNB configuring a small cell.

The macro eNB may be, for example, a "wide area base station" described in Non-Patent Document 7.

The small eNB may be, for example, a low power node, local area node, or hotspot. Alternatively, the small eNB may be a pico eNB configuring a pico cell, a femto eNB configuring a femto cell, HeNB, remote radio head (RRH), remote radio unit (RRU), remote radio equipment (RRE), or relay node (RN). Still alternatively, the small eNB may be a "local area base station" or "home base station" described in Non-Patent Document 7.

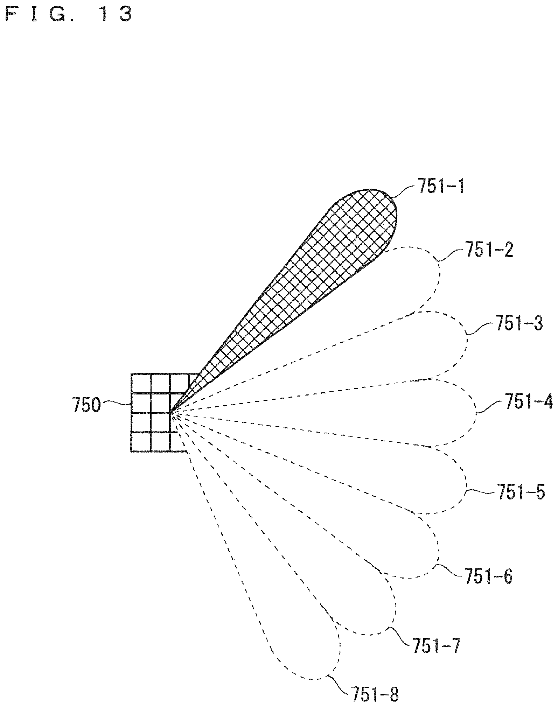

FIG. 13 illustrates an example structure of a cell in NR. In the cell in NR, a narrow beam is formed and transmitted in a changed direction. In the example of FIG. 13, a base station 750 performs transmission and reception with a user equipment via a beam 751-1 at a certain time. The base station 750 performs transmission and reception with the user equipment via a beam 751-2 at another time. Similarly, the base station 750 performs transmission and reception with the user equipment via one or more of beams 751-3 to 751-8. As such, the base station 750 configures a cell with a wide range.

Although FIG. 13 exemplifies that the number of beams to be used by the base station 750 is eight, the number of beams may be different from eight. Although FIG. 13 also exemplifies that the number of beams to be simultaneously used by the base station 750 is one, the number of such beams may be two or more. Further, although FIG. 13 is a diagram in which the beams are formed only in the horizontal direction, the beams may be formed three-dimensionally including the vertical direction as well.

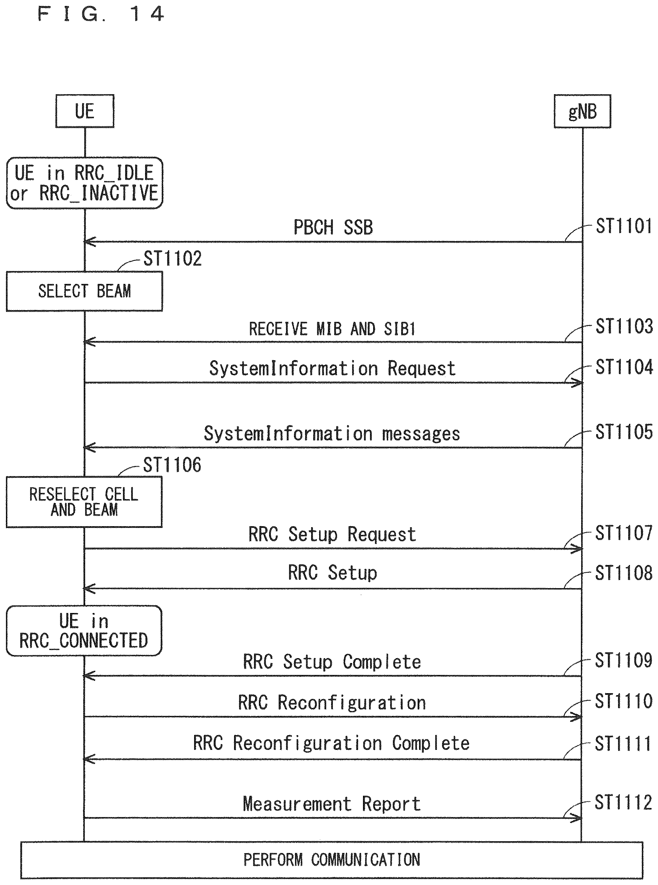

FIG. 14 is a sequence diagram illustrating an outline of a procedure until the UE in an RRC_IDLE or RRC _INACTIVE state performs beam reselection with a conventional method, establishes RRC connection, and performs data communication. Operation of the UE will be described below with reference to FIG. 14.

In Step ST1101, the UE in the RRC _IDLE or RRC_INACTIVE state receives a PBCH SSB of the gNB. The UE performs timing synchronization and measures received power of each beam, and performs beam selection (Step ST1102). Next, the UE receives SIB1 information of the selected beam from the gNB (Step ST1103). Subsequently, the UE requests other SIB information, based on information related to other SIBs included in the SIB1 (Step ST1104). Then, the UE receives other SIB information from the gNB (Step ST1105).

In Step ST1106, the UE performs measurement of received power and received quality of the current cell and neighboring cells, based on the SIB information, and reselects a cell and a beam, based on the measurement results. Here, the selected beam is also referred to as a "reselected beam".

Subsequently, the UE performs an RRC connection request (RRC Setup Request) for the gNB by using the RACH in synchronization with the timing of the beam of the selected cell (Step ST1107), and receives an RRC Setup message from the gNB (Step ST1108). In this manner, the UE transitions to an RRC _CONNECTED state (Non-Patent Document 17).

Next, the UE transmits an RRC Setup Complete message to the gNB (Step ST1109). Then, the UE receives an RRC Reconfiguration message related to a configuration of measurement details from the gNB (Step ST1110).

The UE performs measurement, based on information of Measurement Configuration included in the RRC Reconfiguration message, and transmits an RRC Reconfiguration Complete message to the gNB (Step ST1111). Then, the UE applies processing of Layer 3 filtering with a parameter specified in advance, and then reports Measurement Report to the gNB either periodically or at the time of occurrence of an event (Step ST1112). In this manner, the gNB allocates resources including beam information necessary for data transmission each time in consideration of information of the measurement result report, and forms beams in the direction of the UE, to thereby perform communication (see Non-Patent Document 17).

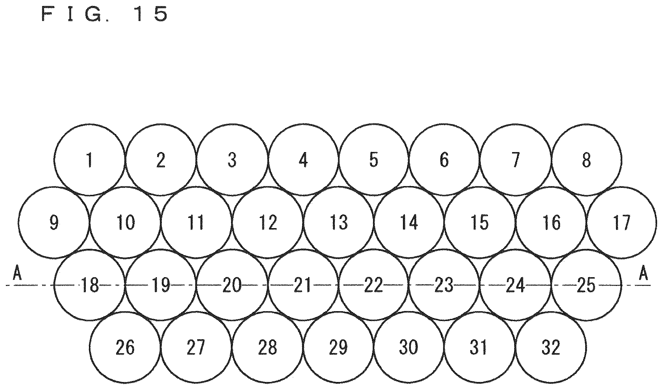

The gNB forms directional beams by using a multi-element antenna or the like. FIG. 15 illustrates an example of radiation areas of directional beams. In FIG. 15, each radiation area has a circular shape, and the number in the circle denotes a reference sign of each directional beam. For example, the circle denoted by the number 19 represents a radiation area of a directional beam 19. In this manner, a communication area of the UE and the gNB is constructed.

Note that, in FIG. 15, each radiation area is represented by one circle having the same size. However, this is merely schematic illustration. In actuality, the sizes of the radiation areas may be different depending on a distance from the gNB, and the shapes of the radiation areas may be different depending on an angle from the gNB. Further, although FIG. 15 illustrates the radiation areas of 32 directional beams, the number of directional beams is not limited thereto.

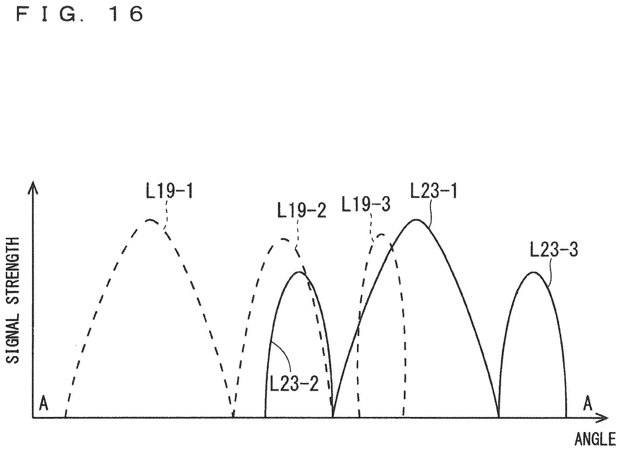

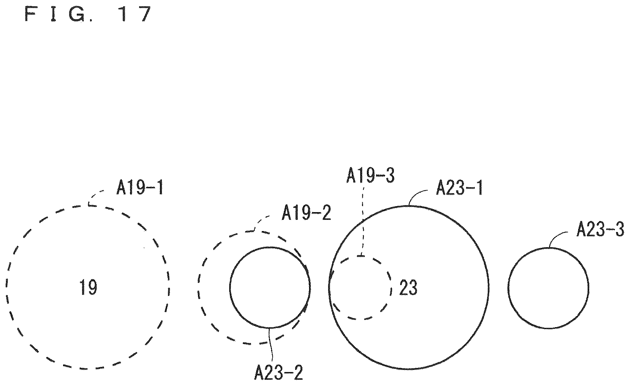

FIG. 16 illustrates an example of radiation patterns of directional beams 19 and 23 in cross-section taken along the line A-A of FIG. 15. The radiation pattern of the directional beam 19 includes a main lobe L19-1 and side lobes L19-2 and L19-3, and the radiation pattern of the directional beam 23 includes a main lobe L23-1 and side lobes L23-2 and L23-3. FIG. 17 illustrates the radiation areas of the directional beams 19 and 23. As illustrated in FIG. 17, the radiation area of the directional beam 19 includes a radiation area A19-1 corresponding to the main lobe L19-1, and radiation areas A19-2 and A19-3 respectively corresponding to the side lobes L19-2 and L19-3.

In a similar manner, the radiation area of the directional beam 23 includes a radiation area A23-1 corresponding to the main lobe L23-1, and radiation areas A23-2 and A23-3 corresponding to the side lobes L23-2 and L23-3. The shape of the side lobe differs depending on a direction of the beam. Thus, depending on a positional relationship between the UE and the gNB, received power and received quality of the side lobe may be detected to be a value higher than the value of the main lobe.

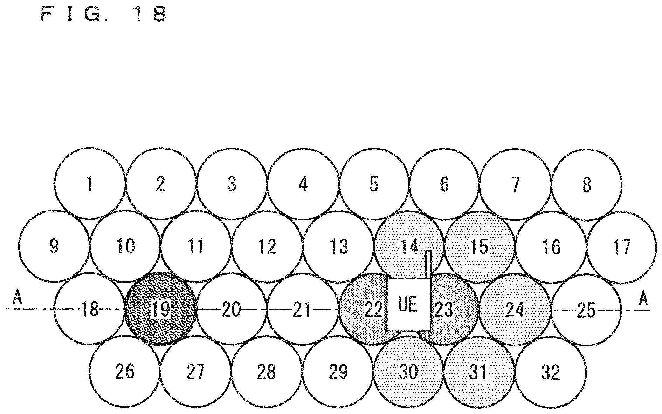

The conventional beam selection method in the RRC_IDLE or RRC _INACTIVE state illustrated in FIG. 14 does not take the difference of the characteristics between the main lobe and the side lobe into consideration. Thus, when received power of a side lobe of a certain beam is higher than received power of a main lobe of another beam, the UE may select a beam of the side lobe, specifically, a beam whose main lobe is not radiated to the position of the UE itself. FIG. 18 illustrates a situation in which the UE is located at a boundary between the radiation areas of the main lobes of directional beams 22 and 23. If received power of the main lobes of the directional beams 22 and 23 is lower than received power of the side lobe of the directional beam 19, the UE may select the directional beam 19 whose main lobe is not radiated to the position of the UE.

In general, the side lobe has a smaller beam width and radiation area than those of the main lobe. Thus, because the side lobe has a smaller beam width and radiation area than those of the main lobe when the UE moves, the side lobe has a smaller distance before the UE leaves from the radiation area when the UE moves. Thus, there is a problem in that, when the UE moves while the UE performs transmission and reception by selecting the beam of the side lobe, communication is not correctly completed due to leaving of the UE from the radiation area.

An ID is assigned to each beam. There has hitherto been a technology of enabling identification of neighboring beams in the UE, with the use of a method of, for example, causing positional relationships of the radiation ranges of the beams to be reflected in the method of assigning the IDs. However, according to such a conventional technology, the reflection needs to be performed in calculation of the measurement results after neighboring beams have been identified in consideration of the positional relationships of the radiation ranges of the beams in the UE (see Patent Document 1).

As illustrated in FIG. 14, the UE in the RRC_IDLE or RRC _INACTIVE state acquires MIB information and SIB information from the gNB, and measures received power and received quality of the current cell and neighboring cells, to thereby perform cell reselection. When the base station of the cell to be measured is the gNB of the NR system, the UE also acquires information related to beams, and measures received power and received quality of each beam, to thereby perform beam reselection as well. Conventionally, the UE identifies a beam with reception timing and the ID assigned to each beam. However, because the main lobe and the side lobes of a directional beam are the same signal, whether measured results have acquired a signal of the main lobe or a signal of the side lobe cannot be distinguished.

Solutions to the problem described above will be disclosed below.

In the first embodiment, information of neighboring beams, specifically, neighboring beam information, is included in the SIB information of the gNB for each beam transmitted by the gNB. Further, as a determination criterion for beam reselection in the UE in the RRC _IDLE or RRC_INACTIVE state, the sum of measurement results of a beam of an evaluation target (hereinafter also referred to as an "evaluation target beam") and measurement results of neighboring beams of the beam (hereinafter also referred to as "neighboring beams") is used as an evaluation value.

The SIB information may be the SIB1. With this configuration, for example, the UE can promptly acquire the neighboring beam information of the gNB. As another example, the SIB information may be the SIB different from the SIB1. With this configuration, for example, broadcast and/or reporting of the neighboring beam information from the gNB to the UE can be executed less frequently than that of the SIB1. As a result, efficiency in the communication system can be enhanced.

As another example, the gNB may include the neighboring beam information in the PBCH. For example, the neighboring beam information may be included in information bits of the PBCH. With this configuration, for example, the UE can promptly acquire information.

As another example, assignment of IDs to the neighboring beams may be performed by using a predetermined method. For example, consecutive IDs may be assigned to neighboring beams. The UE may determine whether or not different beams are neighboring beams by using the predetermined method. For example, the UE may determine that beams that are different from each other and that are assigned consecutive IDs are neighboring beams.

The IDs may be, for example, included in the PBCH. With this configuration, for example, the UE can promptly acquire the information of neighboring beams, and can also execute prompt acquisition of the information in the UE with less signaling between the gNB and the UE. The IDs may be included in the SIB. The SIB may be the SIB1. With this configuration, for example, the size of the PBCH can be reduced.

In general, the main lobe has characteristics of having a larger beam width than the side lobe. Thus, when the UE is in a direction of the main lobe of the gNB of a measurement target, a signal of a neighboring beam can be detected at a higher level as compared to a case in which the UE is in a direction of the side lobe. Utilizing this fact, by also adding measurement results of a neighboring beam to evaluation items used when the UE in the RRC_IDLE or RRC_INACTIVE state selects a beam to be communicated, the UE can preferentially select the main lobe.

In this manner, the UE can preferentially select a beam having a large beam width. As a result, the UE can preferentially select the main lobe. As a result, even when the UE moves during data communication, the frequency that the UE fails in communication due to leaving of the UE from the radiation range of the selected beam can be lowered.

One example of an acquisition method of the neighboring beams is a method described in Patent Document 1. With this method, however, there is a problem in that a processing amount of the UE is increased. In contrast, in the method according to the first embodiment, the information of neighboring beams is included in the SIB, and the UE acquires the information of neighboring beams through the SIB. According to this configuration, it is only necessary that the UE use measurement results and coefficients of specified beams for calculation without consideration of positional relationships of the beams. Thus, the UE can acquire the main lobe with a small processing amount. As a result, the UE can perform prompt beam acquisition.

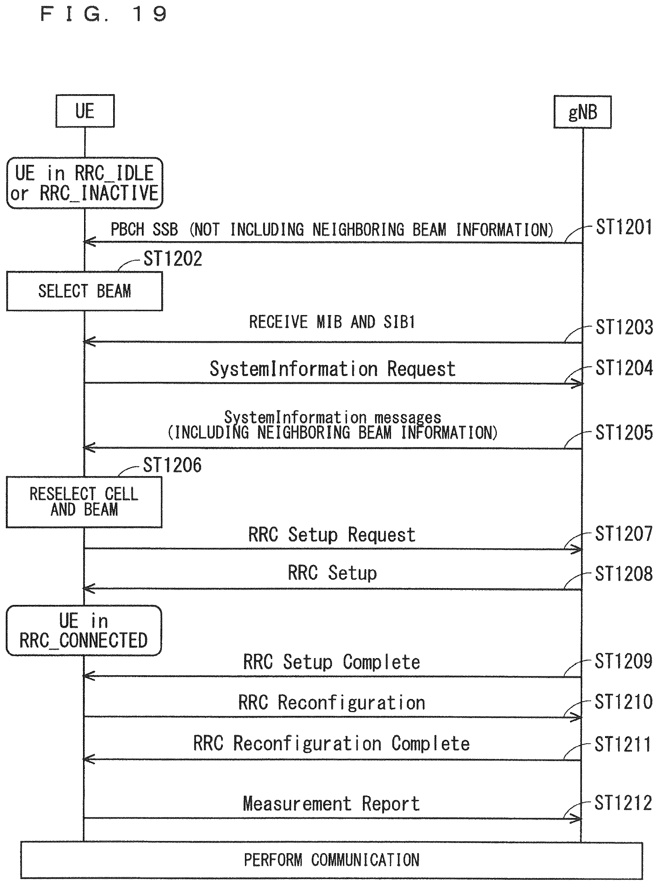

Further specific description will be provided below with reference to FIG. 19. FIG. 19 is a sequence diagram illustrating an outline of a procedure until the UE in the RRC_IDLE or RRC_INACTIVE state performs beam reselection with the method according to the first embodiment, establishes RRC connection, and performs data communication.

In Step ST1201, the UE in the RRC_IDLE or RRC _INACTIVE state receives a PBCH SSB of the gNB. The PBCH SSB does not include positional relationships of the beams, specifically, information of neighboring beams of each beam. Then, the UE performs timing synchronization and measures received power of each beam, and performs beam selection (Step ST1202).

Next, the UE receives MIB information and SIB1 information of the selected beam from the gNB (Step ST1203). Subsequently, the UE requests other SIB information, based on information related to other SIBs included in the SIB1 (Step ST1204). Then, the UE receives other SIB information from the gNB (Step ST1205). In the SIB information received in Step ST1205, regarding each beam, information (hereinafter also referred to as "neighboring beam information") as to which beams are neighboring beams of the beam is included.

In Step ST1206, the UE performs measurement of received power and received quality of the current cell and neighboring cells, based on the SIB information. When the base station of the cell to be measured is the gNB of the NR system, the UE measures received power and received quality for each beam, and selects a beam having the largest evaluation value. Here, the evaluation value is an evaluation value for performing selection as to which beam is appropriate for communication, and the sum of (measurement results of evaluation target beam) and (measurement results of neighboring beam acquired with SIB information) is used as the evaluation value.

Subsequent Step ST1207 to Step ST1212 are similar to Steps ST1107 to ST1112 of FIG. 14.

In this manner, when the UE reselects a beam, by taking measurement results of neighboring beams as well as measurement results of the evaluation target beam into consideration, the UE can preferentially select a beam having a large beam width, specifically, the main lobe. As a result, even when the UE moves during data communication, the frequency of communication failure due to leaving of the UE from the radiation range of the selected beam can be lowered.

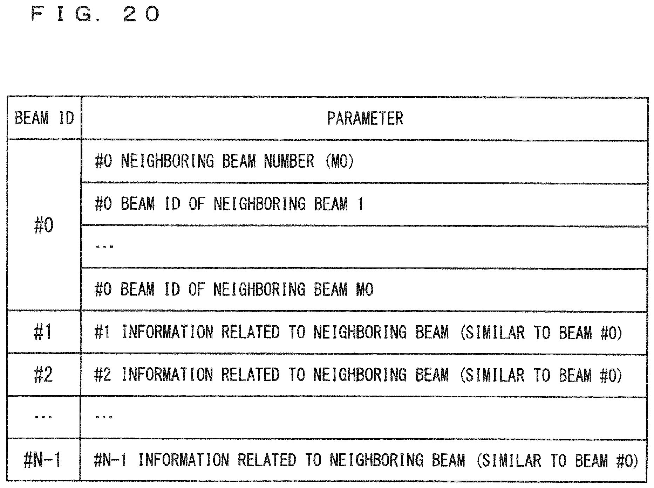

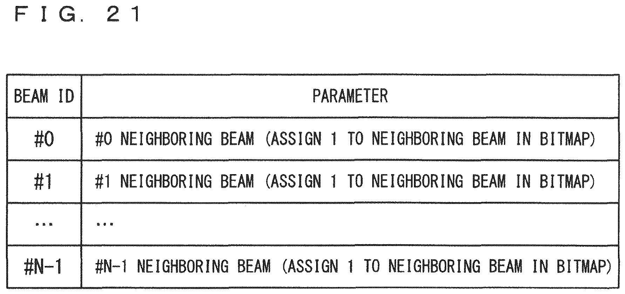

In Step ST1205, the neighboring beam information included in Systemlnformation messages may be provided in the form of adding parameters to information of SIB2 to SIB5 being the existing SIB information for cell reselection. Alternatively, a new SIB for beam-dedicated information may be provided, and the neighboring beam information may be provided by the SIB. Further, the neighboring beam information may be specified by a list of IDs assigned to respective beams as illustrated in FIG. 20, or may be specified in a bitmap format as illustrated in FIG. 21.

In FIG. 20, the neighboring beam number of each beam is included in the parameter to make the parameter have a variable length for each beam. However, when the parameter is made to have a fixed length by omitting the neighboring beam number and the number of neighboring beams is less than the number of parameters, a special value indicating "invalid" may be configured for the parameter. The number of parameters when the parameter is made to have a fixed length may be fixed in a system, or the number of parameters may be changed according to a frequency band because a maximum supported beam number differs depending on a frequency band of the gNB (sub 3 GHz, 3-6 GHz, above 6 GHz, or the like).

FIG. 21 does not illustrate the number of bits of the bitmap format. However, the number of bits may be changed according to a frequency band because a maximum supported beam number differs depending on a frequency band of the gNB (sub 3 GHz, 3-6 GHz, above 6 GHz, or the like).

As the evaluation value of beam reselection in Step ST1206, the above description illustrates an example of simply adding the sum of the measurement results of the evaluation target beam and the measurement results of the neighboring beams. However, the beams formed by the gNB may have different characteristics for each beam. In addition, the beams located at the end of the cell have their neighboring beams only on one side.

Thus, instead of simply adding the measurement results of the neighboring beams, a coefficient of configuring the degree of reflecting the measurement results of the neighboring beams in the evaluation value may be added to the parameter as well as the information of the neighboring beams of each beam. Further, for example, calculation of the evaluation value may be performed as follows: (measurement results of evaluation target beam) + SUM((measurement results of neighboring beam acquired through SIB information) × (coefficient for specifying degree of reflecting measurement results of neighboring beam acquired through SIB information)).

The above illustrates an example of reflecting the measurement results of the neighboring beams in the evaluation value as well as the measurement results of the evaluation target beam at the time of determination of the beam selection described above. However, the radiation patterns of the beams formed by the gNB may be different for each beam.

In addition, the beam width may be different depending on a radiation direction of the beam. Therefore, the neighboring beams to be reflected in the evaluation value need not necessarily be the beams whose beam radiation range is adjacent to the evaluation target beam but may include the second beam from the evaluation target beam, and the range of the neighboring beams may be different for each evaluation target beam.

As described above, the communication system according to the first embodiment includes the following configuration. Specifically, the communication system includes a base station that transmits a plurality of directional beams being different from each other, and a communication terminal that performs radio communication with the base station by selecting a beam for communication from the plurality of beams. Further, a system information block (SIB) transmitted by the base station includes, regarding each of the plurality of beams, the neighboring beam information indicating neighboring beams of the beams.

The communication terminal selects the beam for communication, based on the neighboring beam information. The communication terminal selects the beam for communication, based on the neighboring beam information. Because the communication system according to the first embodiment includes the configuration as described above, the communication terminal can select a beam of the main lobe as the beam for communication, based on the neighboring beam information. As a result, even when the communication terminal moves during data communication, the frequency that the UE fails in communication due to leaving of the UE from the radiation range of the selected beam can be lowered.

The communication system described above may have a more specific configuration as follows, for example. Specifically, the communication terminal measures each of the plurality of beams transmitted from the base station, and regarding each of the plurality of beams, configures an evaluation value, based on measurement values of the beams and the neighboring beams of the beams, and selects the beam for communication, based on the evaluation value.

Therefore, the communication terminal can select a beam of the main lobe as the beam for communication. As a result, even when the communication terminal moves during data communication, the frequency that the UE fails in communication due to leaving of the UE from the radiation range of the selected beam can be lowered.

The configuration described above can be modified in various forms, based on the disclosure and implication of this specification including the first embodiment. According to the configuration described above and modifications of the configuration, the problem described above can be solved, with the result that the effects described above can be obtained.

### First Modification of First Embodiment

The present embodiment describes a configuration that the UE performs reselection of the beam in consideration of the measurement results of the neighboring beams as well as the evaluation target beam. The present embodiment deals with a problem of a case in which the UE leaves the radiation range of the beam during establishment of a communication path due to movement of the UE. This problem is remarkable particularly when moving speed of the UE is high. Therefore, the UE may perform the beam reselection procedure described in the first embodiment illustrated in FIG. 19 only when the moving speed is high, according to a state of Mobility states of the UE.

For example, only when "Mobility states" is a high mobility state, the UE may perform the beam reselection procedure described in the first embodiment illustrated in FIG. 19, whereas when "Mobility states" is a medium mobility state or a normal mobility state, the UE may perform the conventional beam reselection procedure illustrated in FIG. 14.

Further, in which "Mobility states" the UE performs the beam reselection procedure described in the first embodiment illustrated in FIG. 19 may be different depending on a frequency band of the gNB, or may be specified as the SIB information from the gNB.

Specifically, in the communication system according to the first modification of the first embodiment, the UE being a communication terminal selects a beam for communication, based on the neighboring beam information, when the moving speed is equal to or higher than a threshold. In this manner, by performing a beam selection procedure in consideration of the neighboring beam information only under a situation in which the UE is liable to leave the radiation range of the beam, the UE can avoid a situation in which the UE leaves the radiation range of the beam to cause failure in communication, and can also perform efficient communication.

### Second Modification of First Embodiment

As the UE, various devices such as various sensors are assumable other than a mobile terminal device, examples of which include an immobile terminal device. Therefore, only when the UE is a mobile terminal device, the UE may perform the beam reselection procedure described in the first embodiment illustrated in FIG. 19, and only when the UE is a mobile terminal device that moves at a high speed, the UE may perform the beam reselection procedure described in the first embodiment illustrated in FIG. 19.

### Third Modification of First Embodiment

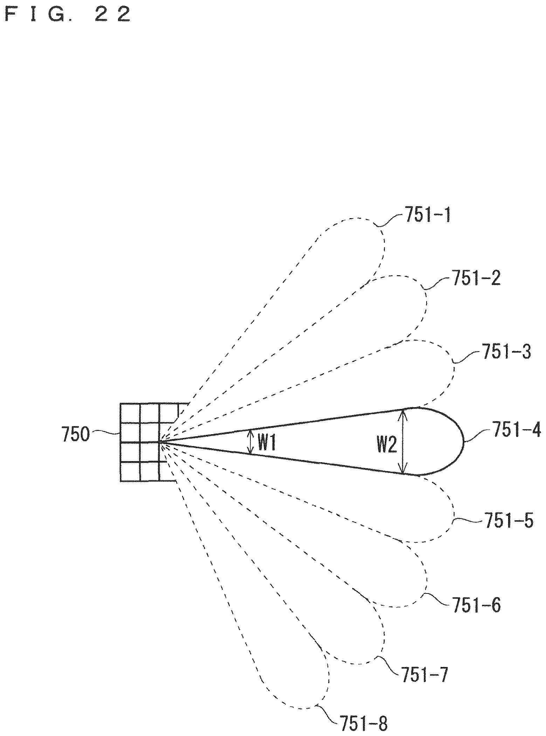

FIG. 22 illustrates the radiation ranges of beams 751-1 to 751-8 formed by the base station 750. The radiation ranges of each of the beams 751-1 to 751-8 are three-dimensionally constructed. Therefore, for example, regarding one beam 751-4, a width W2 of the radiation range at the position farther from the base station 750 is larger than a width W1 of the radiation range at the position closer to the base station 750.

Specifically, when the UE is located at a position far from the base station 750, a period in which the UE remains located in the radiation range of the same beam is long even after the movement of the UE. Thus, only when the UE is located at a position close to the gNB, the UE may perform the beam reselection procedure described in the first embodiment illustrated in FIG. 19.

Specifically, the UE can estimate an attenuation amount in propagation between the gNB and the UE (hereinafter also referred to as a "propagation attenuation amount"), based on a difference between a transmission power value of the PBCH included in the MIB information and the SIB1 information and received power of the PBCH measured by the UE itself. Then, the UE can estimate that the UE is located at a position far from the gNB when the attenuation amount is large, and that the UE is located at a position close to the gNB when the attenuation amount is small.

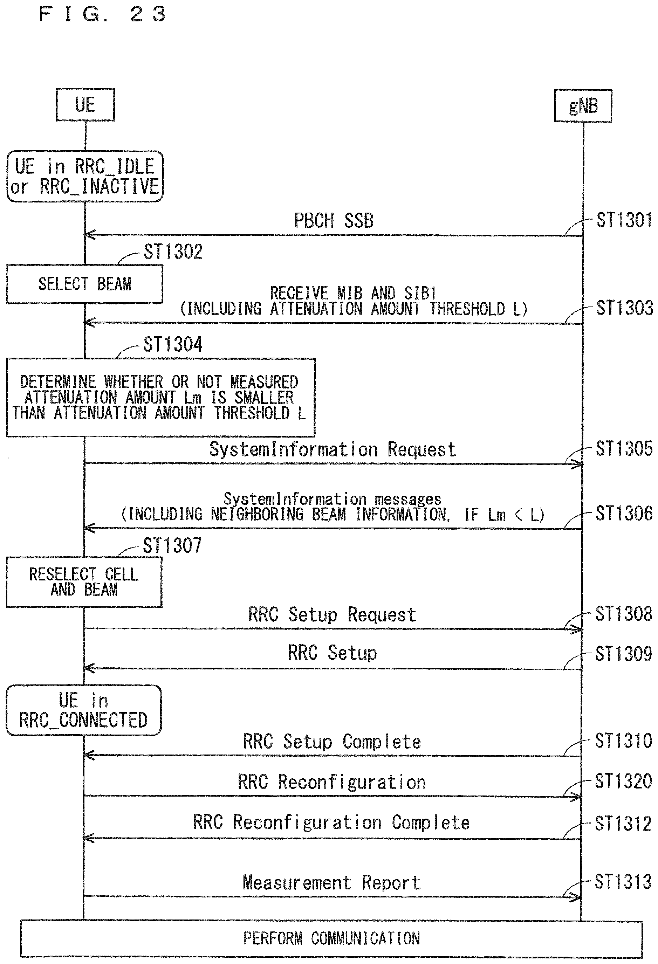

FIG. 23 is a sequence diagram illustrating the beam reselection procedure of the UE in the RRC_IDLE or RRC _ INACTIVE state according to the third modification of the first embodiment. The beam reselection procedure will be described below with reference to FIG. 23. Steps ST1301 and ST1302 are similar to Steps ST1201 and ST1202 of FIG. 19. After ST1302, the UE receives the MIB information and the SIB1 information from the gNB of the selected beam (Step ST1303). In the third modification, an attenuation amount threshold L for selecting the beam reselection procedure is included in the MIB information and the SIB1 information.

Next, the UE calculates a difference between the transmission power value of the PBCH included in the MIB information and the SIB1 information and received power of the PBCH measured by the UE itself, and measures the attenuation amount between the gNB and the UE. Then, the UE determines whether or not a measured attenuation amount (hereinafter referred to as a "measurement attenuation amount") Lm is smaller than the attenuation amount threshold L (Step ST1304). Then, the UE requests other SIB information, based on information related to other SIBs included in the SIB 1 (SystemInformationRequest, Step ST1305). Then, the UE receives other SIB information from the gNB (Systemlnformation messages, Step ST1306). Here, the other SIB information received by the UE includes the neighboring beam information if the attenuation amount is smaller than the threshold L in Step ST1304, whereas the other SIB information does not include the neighboring beam information if the attenuation amount is equal to or larger than the threshold L.

Next, in Step ST1307, the UE performs measurement of received power and received quality of the current cell and neighboring cells, based on the SIB information. When the base station of the cell to be measured is the gNB of the NR system, the UE measures received power and received quality for each beam, and selects a beam having the largest evaluation value. If the attenuation amount is smaller than the threshold L in Step ST1304, similarly to Step ST1206 of FIG. 19, the sum of (measurement results of evaluation target beam) + (measurement results of neighboring beams acquired through SIB information) is used as the evaluation value. In contrast, if the attenuation amount is equal to or larger than the threshold L in Step ST1304, only the measurement results of the evaluation target beam are used as the evaluation value as the conventional method.

Subsequent Step ST1308 to Step ST1313 are similar to Step ST1207 to Step ST1212 of FIG. 19.

In this manner, according to the communication system of the third modification of the first embodiment, the communication terminal selects the beam for communication, based on the neighboring beam information, when the propagation attenuation amount between the communication terminal and the base station is smaller than the threshold L. In this manner, by performing a beam selection procedure in consideration of the neighboring beam information only under a situation in which the UE is liable to leave the radiation range of the beam, the UE can avoid a situation in which the UE leaves the radiation range of the beam to cause failure in communication, and can also perform efficient communication.

### Fourth Modification of First Embodiment

Depending on the frequency band used by the base station device or performance of the multi-element antenna, characteristics of the side lobe differs. Thus, a flag for turning on/off application of the beam reselection procedure described in the first embodiment may be reported to the UE by including the flag in the broadcast information such as the MIB information and the SIB1 information, and the UE may perform the beam reselection procedure described in the first embodiment when the flag is on.

As a reporting method of on/off, a dedicated flag may be provided as described above. Alternatively, only when the neighboring beam information is included in information indicating valid SIBs in the gNB, the UE may perform the beam reselection procedure described in the first embodiment illustrated in FIG. 19.

In this manner, according to the communication system of the fourth modification of the first embodiment, the base station reports, to the communication terminal, the flag indicating whether or not to perform selection of the beam for communication, based on the neighboring beam information. Then, based on the flag, the communication terminal performs selection of the beam for communication based on the neighboring beam information. Owing to such a configuration, whether or not the communication terminal performs selection of the beam for communication based on the neighboring beam information can be determined by the base station.

### Second Embodiment

The first embodiment describes a procedure in which the UE in the RRC_IDLE or RRC_INACTIVE state reselects the cell in consideration of influence of the side lobes. The second embodiment will describe a configuration in which the measurement results of the neighboring beams are added to the evaluation value when the UE in the RRC_CONNECTED state selects the measurement results to be reported in Measurement Report.

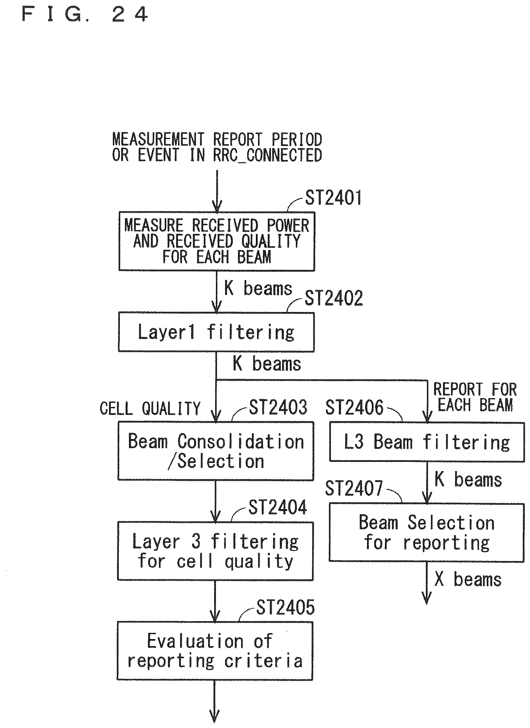

FIG. 24 is a sequence diagram illustrating an example of a conventional procedure until the UE in the RRC _CONNECTED state reports the measurement results to the gNB. The UE performs operation of Step ST2401 for every measurement report period or for every event. In Step ST2401, the UE measures received power and received quality for each beam, based on the information of Measurement Configuration specified from the gNB. Here, K represents the number of beams.

Next, the UE performs Layer 1 filtering processing such as averaging on the measurement results of the K beams measured in Step ST2401 (Step ST2402).

Subsequently, based on the measurement results obtained in Step ST2402, the UE performs, for the gNB, the report of the cell quality (Step ST2403 to Step ST2405) and the measurement result report for each beam (Step ST2406 and Step ST2407).

Step ST2403 is Beam Consolidation/Selection. According to the procedure of the measurement result report defined in Non-Patent Document 18, in this step, the UE selects a beam having the largest measurement results out of the K beams, and calculates cell quality, based on the selected beam.

After Step ST2403, through Layer 3 filtering for cell quality (Step ST2404) and Evaluation of reporting criteria (Step ST2405), the UE reports the cell quality to the gNB.

Step ST2406 is L3 Beam filtering. Step ST2407 is Beam Selecting for reporting. In this step, in a case of an event, the UE sorts out of the measurement results in the order of the measurement values of a measurement item being a trigger of the event, and in a case of periodical reporting, the UE sorts out of the measurement results in the order of the measurement values of RSRP, in the order of the measurement values of RSRQ, or in the order of specified items. Then, the UE reports, to the gNB, as many measurement results as the number of X beams which is the number of reports being separately specified.

The gNB monitors the measurement results reported from the UE, and when appropriate beams used for communication are changed due to movement of the UE, the gNB performs switching of beams to be used for communication with the UE.

Both the processings of Step ST2403 and Step ST2407 are processing performed based only on the measurement results for each beam, and the procedure of FIG. 24 is not a procedure of selecting the beam to be reported in consideration of the difference of the characteristics between the main lobe and the side lobe. Thus, when received power and received quality of the side lobe of a certain beam are higher than received power and received quality of the main lobe of another beam, as illustrated in FIG. 18, the UE may select a beam whose main lobe is not radiated at the position where the UE is located.

In general, the side lobe has a smaller beam width and radiation area than those of the main lobe. Thus, because the side lobe has a smaller beam width and radiation area than those of the main lobe when the UE moves, the side lobe has a smaller distance before the UE leaves from the radiation area when the UE moves. Thus, there is a problem in that the UE may leave the radiation area before the occurrence of the next report period.

Solutions to the problem described above will be disclosed below.

In general, the main lobe has characteristics of having a larger beam width than the side lobe. Thus, the UE in the direction of the main lobe can detect signals of neighboring beams at a high level as compared to a case in which the UE is in the direction of the side lobe. For this reason, by adding the measurement results of the neighboring beams to evaluation items when the beam of a report target is selected, the UE can preferentially select the main lobe.

Specifically, in the second embodiment, similarly to the first embodiment, information indicating which beam is the neighboring beam of each beam for each beam transmitted by the gNB, specifically, the neighboring beam information, is newly added to the SIB information of the gNB. In addition, as the evaluation value being a determination criterion when the UE in the RRC CONNECTED state selects the beam of a report target, the sum of the measurement results of the beam and the measurement results of the neighboring beams is used. Note that the neighboring beam information may be reported to the UE by using UE-dedicated RRC signaling.

In this manner, the UE can preferentially select a beam having a large beam width. As a result, the UE can preferentially select the main lobe. Therefore, there is a lower probability that the UE moves and leaves the beam radiation range before the occurrence of the next report period, and the UE can report the measurement results of a more stable beam to the gNB.

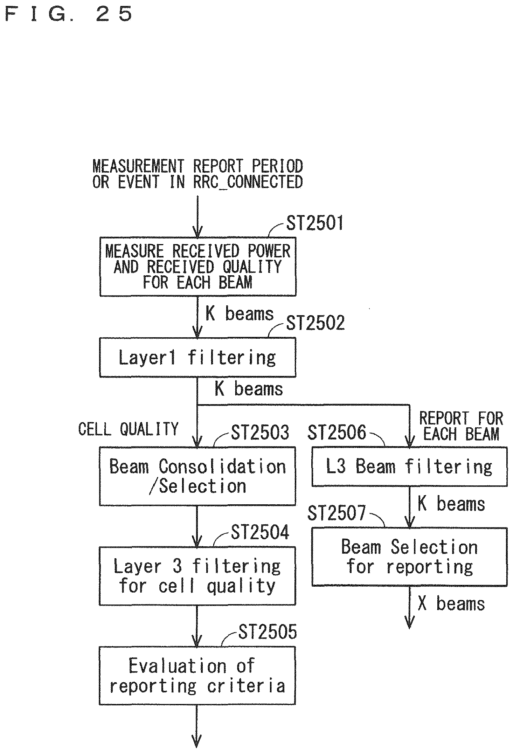

FIG. 25 is a sequence diagram illustrating an example of a procedure of the second embodiment until the UE in the RRC_CONNECTED state reports the measurement results to the gNB.

In FIG. 25, Steps ST2501, ST2502, ST2504, ST2505, and ST2506 are similar to Steps ST2401, ST2402, ST2404, ST2405, and ST2406 of FIG. 24. Step ST2503 is Beam Consolidation/Selection. In this step, the UE selects a beam being a calculation target of cell quality out of K beams. Conventionally, as described in Step ST2403 of FIG. 24, the beam having the largest measurement value is selected as the calculation target of cell quality. In contrast, in the procedure according to the second embodiment, the UE selects the beam having the largest evaluation value as a calculation target of cell quality, with the evaluation value being the sum of the measurement results of the beam and the measurement results of the neighboring beams. Here, the selected beam is also referred to as a "beam for reporting".

Step ST2507 is Beam Selection for reporting. In this step, the UE reports the measurement results for each beam to the gNB. Conventionally, as described in Step ST2407 of FIG. 24, as many measurement results as the number of X beams are selected in the descending order of the measurement values, and the measurement results are reported.

In contrast, in the procedure according to the second embodiment, regarding each beam, the UE selects as many measurement results as the number of X beams in the descending order of the evaluation values, with the evaluation value being the sum of the measurement results of the beam and the measurement results of the neighboring beams, and reports the measurement results. Here, the selected beam is also referred to as a beam for reporting.

By using the evaluation value described above, the UE can reflect not only the measurement results of a specific beam but also the measurement results of neighboring beams of the beam in the determination of selecting the beam of a report target. Therefore, the UE can preferentially select a beam having a large beam width. As a result, the UE can preferentially select the main lobe. As a result, there is a lower probability that the UE moves and leaves the beam radiation range before the occurrence of the next report period, and the UE can report the measurement results of a more stable beam to the gNB.

The description of the first embodiment related to specific examples of the neighboring beam information can be applied to the second embodiment as well.

An L3 filter coefficient used in L3 Beam filtering of Step ST2506 may be a coefficient common to the beams, or may be a dedicated coefficient different for each beam. Such a beam-dedicated coefficient is reported from the gNB to the UE. For example, UE-dedicated RRC signaling may be used for the reporting.

A plurality of beam-dedicated L3 filter coefficients may be provided. For example, the L3 filter coefficient may be provided for each of on/off of the flag disclosed in the fourth modification of the first embodiment. The coefficient is reported from the gNB to the UE. For example, UE-dedicated RRC signaling may be used for the reporting. With this configuration, for example, appropriate filtering coefficients can be configured according to circumstances of the UE. As a result, efficiency in the communication system can be enhanced.

As another example, the L3 Beam filtering of Step ST2506 may be applied to a value of the sum of the measurement results of the evaluation target beam and the measurement results of the neighboring beams. In the description above, the processing of Step ST2506 and Step ST2507 may be performed after Step ST2503 instead of after Step ST2502. With this configuration, for example, the processing amount of L3 Beam filtering can be reduced.

As the evaluation value of beam selection in Step ST2503 and Step ST2507, the above description illustrates an example of simply adding the sum of the measurement results of the evaluation target beam and the measurement results of the neighboring beams is simply added. However, the beams formed by the gNB may have different characteristics for each beam. In addition, the beams located at the end of the cell have their neighboring beams only on one side.

Thus, instead of simply adding the measurement results of the neighboring beams, a coefficient of configuring the degree of reflecting the measurement results of the neighboring beams in the evaluation value may be added to the parameter as well as the information of the neighboring beams of each beam. Further, for example, the evaluation value may be as follows: (measurement results of evaluation target beam)
+ SUM((measurement results of neighboring beam acquired through SIB information)
× (coefficient for specifying degree of reflecting measurement results of neighboring beam acquired through SIB information)) In the above description, SUM() may be the sum of the values in ().

As another example related to the evaluation value of beam selection, a value obtained by adding an average value of the measurement results of the neighboring beams to the measurement results of the evaluation target beam may be used as the evaluation value of beam selection. In calculation of the average value, the measurement results of the neighboring beams equal to or less than or less than a predetermined threshold may not be used. With this configuration, for example, even at the cell end, beam evaluation can be performed in a manner similar to that at positions other than the cell end.

The threshold may be given as an absolute value of the received power, may be given as a relative value in reference to the measurement results of the evaluation target beam, or may be given as a relative value in reference to the received power of the beam having the highest received power out of the neighboring beams. Information related to the threshold, such as a method of giving the threshold disclosed in the description above and/or the values of power may be, for example, determined in a specification in advance, or may be broadcast or reported from the gNB to the UE. For reporting from the gNB to the UE, RRC signaling may be used, MAC signaling may be used, or L1/L2 signaling may be used.

The above illustrates an example of reflecting the measurement results of the neighboring beams in the evaluation value as well as the measurement results of the evaluation target beam at the time of determination of the beam selection described above. However, the radiation patterns of the beams formed by the gNB may be different for each beam. In addition, the beam width may be different depending on a radiation direction of the beam. Therefore, the neighboring beams to be reflected in the evaluation value need not necessarily be the beams whose beam radiation range is adjacent to the evaluation target beam but may include the second beam from the evaluation target beam, and the range of the neighboring beams may be different for each evaluation target beam.

Further, the first to fourth modifications of the first embodiment can be applied to the second embodiment as well.

As described above, in the communication system according to the second embodiment, the communication terminal selects a beam for reporting from the plurality of beams, based on the evaluation value of each of the plurality of beams, and reports measurement results of the beam for reporting to the base station. The beam for reporting is, specifically, a beam that is selected in Beam Consolidation/Selection, and a beam that is selected in Beam Selection for reporting. Here, the evaluation value is configured based on the measurement values of the beam of the evaluation target and neighboring beams of the beam. Therefore, by using the beam of the main lobe as the beam for reporting, the communication terminal can report the measurement results of the beam.

### Third Embodiment

In order to implement high-speed transmission being one of the features of 5G, the use of a transmission frequency band millimeter wave zone in which a wide radio frequency band can be secured has been under study. In 5G, it is expected that 3.5 GHz band, 4.5 GHz band, 28 GHz band, and the like are to be used, and in addition, allocation of a radio frequency band of 30 GHz to 90 GHz has also been under study.

However, in radio wave propagation of a millimeter wave zone, communication of a line-of-sight distance will be mainly dealt with. Thus, depending on a location at which the base station device is installed, there may be an obstruction in a direction of some directional beams. Accordingly, communication using the beams may not be able to be substantially performed, or communication using the beams may not be performed because of the communication terminal being unable to enter the radiation areas of the beams. In such cases, transmission of the beams is not valid but is useless in actual communication.

Further, because beams invalid for communication are transmitted from the gNB, the side lobes of the beams are interference in communication using other beams, which may be a factor leading to deterioration of communication quality.

The base stations using the high frequency band of 30 GHz to 90 GHz include such a base station that is practically used as a picocell, in which a multi-element antenna, an RF unit, an AD/DA converter, and the like are integrated as one chip. When a user installs such a base station, there is a problem in that beams are transmitted also in a useless direction in which there is a blocking object.

As solutions to the problem described above, in the communication system according to the third embodiment, in the base station, positions of the communication target and the obstruction are identified with the use of an inexpensive camera or sensor such as one mounted in a portable terminal, and beams in a direction of a region blocked by the obstruction are autonomously eliminated from a transmission target. Then, the base station reports information of the beams eliminated from the transmission target to the communication terminal by using a parameter such as ssb-ToMeasurement included in broadcast information. The communication terminal eliminates the reported beams from a search target of the beam for communication. In this manner, the base station can prevent transmission of useless beams that are not to be used for communication.

Information related to the position of the portable terminal may be reported from the above-described camera and/or sensor to a communication function of the portable terminal. The information may be, for example, information related to whether or not there is an obstruction, or may be coordinates of the terminal. The information may be, for example, reported in a format similar to RRC signaling, may be reported in a format similar to NAS signaling, or may be reported in another format. With this configuration, for example, the communication function of the portable terminal can promptly report the information to the base station, and can also reduce the processing amount in the communication function.

It is assumable that a user changes orientation of the installed base station, or a temporarily deployed obstruction moves. In view of this, the base station may periodically perform identification processing of the obstruction by using the above-described camera or sensor. In this manner, according to a change in the surrounding environment, the base station can autonomously switch beams to be transmitted, and the communication terminal can update the beams to be eliminated from the search target of the beam for communication.

As described above, according to the communication system of the third embodiment, the base station identifies positions of the communication terminal and the obstruction, and eliminates a beam having directivity in a direction of the obstruction from a transmission target. In this manner, the base station can prevent transmission of useless beams that are not to be used for communication.

### First Modification of Third Embodiment

The region blocked by the obstruction is larger as the distance between the base station and the obstruction is closer. Thus, the frequency that the communication target exists in the radiation areas of the directional beams having directivity in the direction of the obstruction becomes less. In view of this, the base station may estimate a distance between the base station and the obstruction for each direction of the directional beams by using a camera or a sensor, and may lower the frequency of allocation of communication resources with a scheduler regarding the beam whose distance is smaller than other beams.

Specifically, in the communication system according to the first modification of the third embodiment, the base station estimates a distance between the base station and an obstruction, and configures frequency of allocation of communication resources for a beam having directivity in a direction of the obstruction, according to the distance between the base station and the obstruction. In this manner, the opportunity of communication can be made equal between the beams.

### Second Modification of Third Embodiment

The base station may measure movement frequency of the communication target by using a camera or a sensor, in addition to the operation described in the third embodiment. The movement frequency refers to, for example, the number of times of movement within unit time. Further, when the movement frequency of the communication target is high, the base station may reduce a transmission period of the downlink reference signal for each beam, or the UE may increase a measurement period.

In this manner, the base station can transmit valid beams further in accordance with the movement of the UE. In contrast, when the movement frequency of the communication target is low, the base station may increase the transmission period of the downlink reference signal for each beam, or the UE may reduce the measurement period. In this manner, the base station can prevent transmission of useless radio waves.

The base station may perform the transmission or non-transmission of the beams or the change of transmission frequency described above by using only information of the camera or the sensor, or this may be determined in combination of statistical information of actual communication frequency.

Specifically, in the communication system according to the first modification of the third embodiment, the base station measures movement frequency of the communication terminal, and configures a transmission period of a downlink reference signal for each beam, based on the movement frequency. Therefore, the base station can prevent transmission of useless radio waves.

### Third Modification of Third Embodiment

When the base station detects a change in the orientation of the base station with the camera or the sensor, the base station may autonomously acquire transmission circumstances of neighboring cells again, and update the beams of the transmission target according to the transmission circumstances of the neighboring cells. In this manner, interference between the base station devices located near each other can be prevented.

### Fourth Embodiment

Although the third embodiment discloses an example related to identification of the position of the communication terminal with the use of the camera or the sensor mounted in the communication terminal, a supplementary uplink (SUL) (see Non-Patent Document 17) may be used. The frequency used in the SUL may be, for example, a frequency lower than the millimeter waves. The base station may give a command of uplink signal transmission using the SUL to the UE.

The UE may transmit an uplink signal to the base station by using the SUL. The base station may estimate the position of the UE through reception of the uplink signal. The uplink signal may be, for example, the SRS, may be the PRACH, or may be another uplink signal. With this configuration, for example, the camera and/or the sensor no longer needs to be mounted in the communication terminal. As a result, complexity in the communication system can be avoided. When a frequency lower than the millimeter waves is used for the SUL, with the use of the SUL, the UE can communicate with the base station beyond the obstruction described above.

In the first to fourth modifications of the third embodiment as well, the SUL may be used in a manner similar to the description above. With this configuration, for example, effects similar to those described above can be obtained.

Note that, in the present invention, each embodiment can be freely combined, and each embodiment can be modified or omitted as appropriate within the scope of the invention. The above description is in all aspects illustrative. It is understood that numerous unillustrated modifications can be devised.

### Explanation of Reference Signs

- 200: Communication system
- 210: Communication system
- 202: Mobile terminal
- 203: Base station device

## Claims

1. A communication system comprising:
- a base station configured to transmit a plurality of directional beams being different from each other; and
- a communication terminal configured to perform radio communication with the base station by using a beam for communication selected from the plurality of directional beams, wherein
- a system information block transmitted by the base station includes, regarding each of the plurality of directional beams, neighboring beam information indicating neighboring beams being adjacent to each of the plurality of directional beams, and
the communication terminal selects the beam for communication, based on the neighboring beam information.

2. The communication system according to claim 1, wherein
the communication terminal measures each of the plurality of directional beams, and regarding each of the plurality of directional beams, configures an evaluation value, based on measurement values of each of the plurality of directional beams and the neighboring beams of each of the plurality of directional beams, and selects the beam for communication, based on the evaluation value.

3. The communication system according to claim 1 or 2, wherein
the communication terminal selects the beam for communication, based on the neighboring beam information, when a moving speed is equal to or higher than a threshold.

4. The communication system according to claim 1 or 2, wherein
the communication terminal selects the beam for communication, based on the neighboring beam information, when the communication terminal is a mobile terminal.

5. The communication system according to claim 1 or 2, wherein
the communication terminal selects the beam for communication, based on the neighboring beam information, when a propagation attenuation amount between the communication terminal and the base station is smaller than a threshold.

6. The communication system according to claim 1 or 2, wherein
the base station reports, to the communication terminal, a flag indicating whether or not to perform selection of the beam for communication based on the neighboring beam information, and
the communication terminal performs selection of the beam for communication based on the neighboring beam information, based on the flag.

7. The communication system according to claim 2, wherein
the communication terminal selects a beam for reporting from the plurality of directional beams, based on the evaluation value of each of the plurality of directional beams, and reports measurement results of the beam for reporting to the base station.

8. The communication system according to any one of claims 1 to 7, wherein the base station identifies positions of the communication terminal and an obstruction, and eliminates one of the plurality of directional beams having directivity in a direction of the obstruction from a transmission target.

9. The communication system according to any one of claims 1 to 7, wherein the base station estimates a distance between the base station and an obstruction, and configures frequency of allocation of communication resources for one of the plurality of directional beams having directivity in a direction of the obstruction, according to the distance between the base station and the obstruction.

10. The communication system according to claim 8 or 9, wherein
the base station measures movement frequency of the communication terminal, and configures a transmission period of a downlink reference signal for each of the plurality of directional beams, based on the movement frequency.

11. A communication terminal that performs radio communication with a base station by using a beam for communication selected from a plurality of beams transmitted by the base station, wherein
the communication terminal selects the beam for communication, based on neighboring beam information indicating neighboring beams of the plurality of beams regarding each of the plurality of beams included in an information block transmitted by the base station.

12. A base station configured to perform radio communication with a communication terminal, wherein
the base station transmits a plurality of directional beams being different from each other, and
regarding each of the plurality of directional beams, the base station transmits neighboring beam information indicating neighboring beams of each of the plurality of directional beams to the communication terminal by including the neighboring beam information in an information block.
